(19) **Europäisches Patentamt**
**European Patent Office**
**Office européen des brevets**

(11) **EP 4 614 927 A1**

(12) **EUROPEAN PATENT APPLICATION**
published in accordance with Art. 153(4) EPC

(43) Date of publication:
**10.09.2025 Bulletin 2025/37**

(21) Application number: **23884817.0**

(22) Date of filing: **30.10.2023**

(51) International Patent Classification (IPC):
***H04L 43/08*** *(2022.01)*

(52) Cooperative Patent Classification (CPC):
**H04L 43/08**

(86) International application number:
**PCT/CN2023/127614**

(87) International publication number:
**WO 2024/093886 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 CN 202211349104
31.10.2022 CN 202211352422**

(71) Applicant: **China United Network
Communications
Group Company Limited
Beijing 100033 (CN)**

(72) Inventors:
 • **LI, Yi
  Beijing 100033 (CN)**
 • **JIN, Yuchao
  Beijing 100033 (CN)**
 • **ZHENG, Yuting
  Beijing 100033 (CN)**

 • **WANG, Jingyun
  Beijing 100033 (CN)**
 • **LONG, Qingliang
  Beijing 100033 (CN)**
 • **LI, Fei
  Beijing 100033 (CN)**
 • **LI, Deyi
  Beijing 100033 (CN)**
 • **ZHU, Xiaomeng
  Beijing 100033 (CN)**
 • **JIA, Yuwei
  Beijing 100033 (CN)**
 • **DI, Zixiang
  Beijing 100033 (CN)**
 • **CAO, Lijuan
  Beijing 100033 (CN)**
 • **LI, Bei
  Beijing 100033 (CN)**
 • **CHENG, Xinzhou
  Beijing 100033 (CN)**

(74) Representative: **Murgitroyd & Company
165-169 Scotland Street
Glasgow G5 8PL (GB)**

(54) **NETWORK ENERGY EFFICIENCY DETERMINATION METHOD AND APPARATUS, AND STORAGE MEDIUM**

(57) The present application relates to the technical field of communications, and provides a network energy efficiency determination method and apparatus, and a storage medium, which can improve the accuracy of network energy efficiency. The method comprises: determining first data and reliability of a target slice in a target time period, wherein the first data comprises energy consumption and average time delay, the first data further comprises traffic, the reliability is used for representing a transmission success rate of a data packet transmitted between a target core network device and a target access network device, and the target core network device and the target access network device are both devices in the target slice; and determining network energy efficiency of the target slice in the target time period according to the first data and the reliability. Embodiments of the present application are used in the process of determining network energy efficiency.

FIG. 2

**Description**

The present disclosure claims priority to Chinese Patent Application No. 202211349104.4, filed with Chinese National Intellectual Property Administration (CNIPA) on October 31, 2022 and titled "network energy efficiency determination method and apparatus, and storage medium", and claims priority to Chinese Patent Application No. 202211352422.6, filed with CNIPA on October 31, 2022 and titled "network energy efficiency determination method and apparatus, and storage medium", the entire contents of which are incorporated herein by reference.

TECHNICAL FIELD

The present disclosure relates to the field of communication technology, and in particular to a network energy efficiency determination method, an apparatus, and a storage medium.

BACKGROUND

In communication networks, network energy efficiency may reflect the energy usage efficiency of the network and play a key role in enabling operators to acquire the actual situation of the network.

At present, the determination of network energy efficiency is mainly based on matrices such as energy consumption, latency, and traffic. However, the network energy efficiency determined by the above methods cannot accurately reflect the actual situations of the network, resulting in low accuracy of the network energy efficiency.

SUMMARY

The present disclosure provides a network energy efficiency determination method, an apparatus, and a storage medium, which can improve the accuracy of network energy efficiency.

For this, the present disclosure adopts following technical solutions.

In a first aspect, the present disclosure provides a network energy efficiency determination method, and the method includes: determining first data and reliability of a target slice within a target period, where the first data includes: energy consumption; the first data further includes at least one of an average latency and traffic; the reliability is used to characterize a transmission success rate of packets transmitted between a target core network device and a target access network device, or the reliability is used to characterize a transmission success rate of packets transmitted from at least one interface of the target slice; the target core network device and the target access network device are both devices in the target slice; and determining network energy efficiency of the target slice within the target period according to the first data and the reliability.

In a possible implementation, determining the reliability of the target slice within the target period includes: acquiring a number of first packets, and any one of a number of second packets, and a number of third packets of the target slice within the target period, where the number of first packets is used to characterize a number of packets transmitted based on a target interface; the number of second packets is used to characterize a number of successfully transmitted packets based on the target interface; the number of third packets is used to characterize a number of packets with a latency of the second packet being less than or equal to a preset latency threshold, among the second packet; and the target interface is an interface between the target core network device and the target access network device; and determining the reliability of the target slice within the target period based on any one of the number of the second packets and the number of the third packets, and the number of the first packets.

In a possible implementation, the number of first packets includes: a number of uplink first packets and a number of downlink first packets; the uplink first packet is a packet transmitted from the target access network device; the downlink first packet is a packet transmitted from the target access network device; the number of second packets includes a number of uplink second packets and a number of downlink second packets; the uplink second packet is a packet received by the target access network device; the downlink second packet is a packet received by the target core network device; the number of third packets includes a number of uplink third packets and a number of downlink third packets; the uplink third packet is a packet with an uplink latency of the second packet being less than or equal to a first preset latency threshold, among the uplink second packet; the number of downlink third packets is a packet with a downlink latency of the second packet being less than or equal to a second preset latency threshold, among the downlink second packet.

In a possible implementation, the reliability satisfies a formula as follows:

$$Re=(DLA2/DLA1)\times(ULA2/ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re=(DLA2+ULA2)/(DLA1+ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re=(DLA3/DLA1)\times(ULA3/ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, the reliability satisfies a formula as follows:

$$Re=(DLA3+ULA3)/(DLA1+ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, determining the reliability of the target slice within the target period includes: acquiring a number of first packets and a number of second packets of each interface among the at least one interface of the target slice within the target period, where the number of first packets is a number of packets transmitted from any one of ends of the interface to a remaining end of the interface, or the number of first packets is a number of packets transmitted from the any one of ends to the remaining end, and with a transmission time being less than or equal to a preset period; and the number of second packets is a number of packets transmitted from the any one of ends; and determining the reliability of the target slice within the target period based on the number of first packets and the number of second packets of the each interface.

In a possible implementation, the number of first packets includes a number of uplink first packets and a number of downlink first packets; the number of uplink first packets is a number of packets transmitted from a first end of the interface to a second end of the interface, or the number of uplink first packets is a number of packets transmitted from the first end to the second end, and with a transmission time being less than or equal to the preset period; the number of downlink first packets is a number of packets transmitted from the second end to the first end, or the number of downlink first packets is a number of packets transmitted from the second end to the first end, and with the transmission time being less than or equal to the preset period; the number of second packets includes a number of uplink second packets and a number of downlink second packets; the number of uplink second packets is a number of packets transmitted from the first end; and the number of downlink second packets is a number of packets transmitted from the second end.

In a possible implementation, the at least one interface includes a first interface and a second interface, and the reliability satisfies a formula as follows:

$$Re=(DLA1/DLA2)\times(ULA1/ULA2)\times(DLB1/DLB2)\times(ULB1/ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ULB1)/(DLB2+ULA2).$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, the at least one interface includes a first interface and a second interface, and the reliability satisfies a formula as follows:

$$Re=(DLA1+ULA1+DLB1+ULB1)/(DLA2+ULA2+DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1 +ULA1)/(DLA2+ ULA2)\times(DLB1+ULB1)/(DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ DLB1)/(DLA2+ DLB2)\times(ULA1+ ULB1)/(ULA2+ ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1/DLB2)\times(ULB1/ULA2).$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, in a case where the first data includes the energy consumption, determining the network energy efficiency of the target slice within the target period based on the first data and the reliability includes: determining a ratio of the reliability to the energy consumption as the network energy efficiency.

In a possible implementation, in a case where the first data further includes the average latency, determining the network energy efficiency of the target slice within the target period based on the first data and the reliability includes: determining a ratio of the reliability to the average latency as a first value; and determining a ratio of the first value to the energy consumption as the network energy efficiency.

In a possible implementation, in a case where the first data further includes the traffic, and the traffic includes traffic of the first interface and traffic of the second interface, determining the network energy efficiency of the target slice within the target period based on the first data and the reliability includes: performing a weighted summation calculation on the traffic of the first interface and the traffic of the second interface to obtain a second value, and determining a product of the reliability and the second value as a third value; and determining a ratio of the third value to the energy consumption as the network energy efficiency.

In a possible implementation, in a case where the first data further includes the average latency and the traffic,

and the traffic includes the traffic of the first interface and the traffic of the second interface, determining the network energy efficiency of the target slice within the target period based on the first data and the reliability includes: performing a weighted summation calculation on the traffic of the first interface and the traffic of the second interface to obtain a second value, and determining a ratio of a product of the reliability and the second value, to the average latency as a fourth value; and determining a ratio of the fourth value to the energy consumption as the network energy efficiency.

In a second aspect, the present disclosure provides a network energy efficiency determination apparatus, and the apparatus includes: a processing unit; the processing unit is configured to determine first data and reliability of a target slice within a target period, where the first data includes: energy consumption; the first data further includes at least one of an average latency and traffic; the reliability is used to characterize a transmission success rate of packets transmitted between a target core network device and a target access network device, or the reliability is used to characterize a transmission success rate of packets transmitted from at least one interface of the target slice; the target core network device and the target access network device are both devices in the target slice; and the processing unit is further configured to determine network energy efficiency of the target slice within the target period according to the first data and the reliability.

In a possible implementation, the network energy efficiency determination apparatus further includes: a communication unit; the communication unit is configured to acquire a number of first packets, and any one of a number of second packets, and a number of third packets of the target slice within the target period, where the number of first packets is used to characterize a number of packets transmitted based on a target interface; the number of second packets is used to characterize a number of successfully transmitted packets based on the target interface; the number of third packets is used to characterize a number of packets with a latency of the second packet being less than or equal to a preset latency threshold, among the second packet; and the target interface is an interface between the target core network device and the target access network device; and the processing unit is further configured to determine the reliability of the target slice within the target period based on any one of the number of the second packets and the number of the third packets, and the number of the first packets.

In a possible implementation, the number of first packets includes: a number of uplink first packets and a number of downlink first packets; the uplink first packet is a packet transmitted from the target access network device; the downlink first packet is a packet transmitted from the target access network device; the number of second packets includes a number of uplink second packets and a number of downlink second packets; the uplink second packet is a packet received by the target access network device; the downlink second packet is a packet received by the target core network device; the number of third packets includes a number of uplink third packets and a number of downlink third packets; the uplink third packet is a packet with an uplink latency of the second packet being less than or equal to a first preset latency threshold, among the uplink second packet; the number of downlink third packets is a packet with a downlink latency of the second packet being less than or equal to a second preset latency threshold, among the downlink second packet.

In a possible implementation, the reliability satisfies a formula as follows:

$$Re=(DLA2/DLA1)\times(ULA2/ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re=(DLA2+ULA2)/(DLA1+ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re=(DLA3/DLA1)\times(ULA3/ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, the reliability satisfies a formula as follows:

$$Re=(DLA3+ULA3)/(DLA1+ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, the apparatus further includes: a communication unit; the communication unit is further configured to acquire a number of first packets and a number of second packets of each interface among the at least one interface of the target slice within the target period, where the number of first packets is a number of packets transmitted from any one of ends of the interface to a remaining end of the interface, or the number of first packets is a number of packets transmitted from the any one of ends to the remaining end, and with a transmission time being less than or equal to a preset period; and the number of second packets is a number of packets transmitted from the any one of ends; and the processing unit is further configured to determine the reliability of the target slice within the target period based on the number of first packets and the number of second packets of the each interface.

In a possible implementation, the number of first packets includes a number of uplink first packets and a number of downlink first packets; the number of uplink first packets is a number of packets transmitted from a first end of the interface to a second end of the interface, or the number of uplink first packets is a number of packets transmitted from the first end to the second end, and with a transmission time being less than or equal to the preset period; the number of downlink first packets is a number of packets transmitted from the second end to the first end, or the number of downlink first packets is a number of packets transmitted from the second end to the first end, and with the transmission time being less than or equal to the preset period; the number of second packets includes a number of uplink second packets and a number of downlink second packets; the number of uplink second packets is a number of packets transmitted from the first end; and the number of downlink second packets is a number of packets transmitted from the second end.

In a possible implementation, the at least one interface includes a first interface and a second interface, and the reliability satisfies a formula as follows:

$$Re=(DLA1/DLA2)\times(ULA1/ULA2)\times(DLB1/DLB2)\times(ULB1/ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ULB1)/(DLB2+ULA2).$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, the at least one interface includes a first interface and a second interface, and the reliability satisfies a formula as follows:

$$Re=(DLA1+ULA1+DLB1+ULB1)/(DLA2+ULA2+DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ULA1)/(DLA2+ULA2)\times(DLB1+ULB1)/(DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+DLB1)/(DLA2+DLB2)×(ULA1+ULB1)/(ULA2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1/DLB2)×(ULB1/ULA2).$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, in a case where the first data includes the energy consumption, the processing unit is further configured to determine a ratio of the reliability to the energy consumption as the network energy efficiency.

In a possible implementation, in the case where in a case where the first data further includes the average latency, the processing unit is further configured to determine a ratio of the reliability to the average latency as a first value; the processing unit is further configured to determine a ratio of the first value to the energy consumption as the network energy efficiency.

In a possible implementation, in a case where the first data further includes the traffic, and the traffic includes traffic of the first interface and traffic of the second interface, the processing unit is further configured to perform a weighted summation calculation on the traffic of the first interface and the traffic of the second interface to obtain a second value, and determine a product of the reliability and the second value as a third value; and the processing unit is further configured to determine a ratio of the third value to the energy consumption as the network energy efficiency.

In a possible implementation, in a case where the first data further includes the average latency and the traffic, and the traffic includes traffic of the first interface and traffic of the second interface, the processing unit is further configured to perform a weighted summation calculation on the traffic of the first interface and the traffic of the second interface to obtain a second value, and determine a ratio of a product of the reliability and the second value, to the average latency, as a fourth value; the processing unit is further configured to determine a ratio of the fourth value to the energy consumption as the network energy efficiency.

In a third aspect, the present disclosure provides a network energy efficiency determination apparatus, and the apparatus includes a processor and a communication interface coupled with each other and the processor is configured to execute a computer program or instructions to implement the network energy efficiency determination method described in the first aspect and any one of possible implementations of the first aspect.

In a fourth aspect, the present disclosure provides a computer readable storage medium having instructions stored therein, the instructions, when executed on a terminal, cause the terminal to perform the network energy efficiency determination method described in the first aspect and any one of possible implementations of the first aspect.

In a fifth aspect, the present disclosure provides a computer program product containing instructions, the computer program product, when executed a network energy efficiency determination apparatus, causes the network energy efficiency determination apparatus to perform the network energy efficiency determination method described in the first aspect and any one of possible implementations of the first aspect.

In a sixth aspect, the present disclosure provides a chip, and the chip includes a processor and a communication interface coupled with each other and the processor is configured to execute a computer program or instructions to implement the network energy efficiency determination method described in the first aspect and any one of possible implementations of the first aspect.

Specifically, the chip provided by the present disclosure further includes a memory configured to store a computer program or instructions.

The above technical solutions bring about at least beneficial effects as follows. In the network energy efficiency determination method provided by the present disclosure, the computing device may determine the first data (i.e., the energy consumption, or the energy consumption, and any one of the average latency, and the traffic) and the reliability of the target slice within the target period, and determine the network energy efficiency of the target slice within the target period according to the determined first data and reliability. Therefore, in the network energy efficiency determination method provided by the present disclosure, metrics such as energy consumption, latency, and traffic may be combined with reliability to jointly serve as data support for determining the network energy efficiency, which enables the determination of network energy efficiency to more comprehensively and accurately reflect the actual situations of the network, thereby improving the accuracy of network energy efficiency.

BRIEF DESCRIPTION OF THE DRAWINGS

FIG. 1 is a structural diagram of a communication system, provided by the embodiments of the present disclosure.
FIG. 2 is a flow chart of a network energy efficiency determination method, provided by the embodiment of the present disclosure.
FIG. 3 is a flow chart of another network energy efficiency determination method, provided by the embodiment of the present disclosure.
FIG. 4 is a flow chart of another network energy efficiency determination method, provided by the embodiment of the present disclosure.
FIG. 5 is a flow chart of another network energy efficiency determination method, provided by the embodiment of the present disclosure.
FIG. 6 is a structural schematic diagram of a network energy efficiency determination apparatus, provided by the embodiments of the present disclosure.
FIG. 7 is a structural schematic diagram of another network energy efficiency determination apparatus, provided by the embodiments of the present disclosure.

DETAILED DESCRIPTION

The network energy efficiency determination method, apparatus and storage medium provided by the embodiments of the present disclosure will be described in detail below with reference to the drawings.

The term "and/or" in the present document is only used to describe an association relationship between associated objects, and means the existence of three relationships, for example, A and/or B may mean the existence of only A, both A and B, and only B.

The terms "first" and "second" in the specification and accompanying drawings of the present disclosure are used to distinguish different objects, or to distinguish different processing of a same object, rather than describing a specific order of objects.

Furthermore, the terms "comprising/including" and "having" and any variations thereof mentioned in the descriptions of the present disclosure are intended to cover non-exclusive inclusion. For example, a procedure, method, a system, a product or a device that contains a series of steps or units is not limited to the listed steps or units, but optionally also includes other unlisted steps or units, or optionally also includes other steps or units inherent to such procedure, method, product or device.

It should be noted that, in the embodiments of the present disclosure, the words such as "exemplary" or "for example" are used to represent an example, illustration, or explanation. Any embodiment or design solution described in connection with "exemplary" or "for example" in the embodiments of the present disclosure is not necessarily to be construed as preferred or advantageous over other embodiments or design solutions. To be precise, the usage of the words, such as "exemplary" or "for example", is intended to present relevant concepts in a specific manner.

In the description of the embodiments of the present disclosure, "multiple" means two or more than two, unless otherwise stated.

Below, the terms involved in the embodiments of the present disclosure will be explained to facilitate readers' understanding.

1. Ultra reliable low latency communication (ultra reliable low latency communication, URLLC)

URLLC has the characteristics of ultra-low latency and ultra-high reliability. URLLC may be widely applied in industrial control scenarios, device automation scenarios, Internet of Vehicles scenarios, smart grid scenarios, and remote surgery scenarios.

In some examples, URLLC can ensure that the uplink latency and downlink latency of service transmission between the access network device and the terminal device (i.e., wireless side) is less than or equal to 0.5 milliseconds (ms), and URLLC can also make the reliability of the above service transmission reach the 10-5 level.

2. Network Energy Efficiency (NEE)

Network energy efficiency refers to key performance indicators (KPIs) used to reflect the energy efficiency of the network.

In a possible implementation, the network energy efficiency may include latency-based network energy efficiency and latency and traffic-based network energy efficiency. The latency-based network energy efficiency and the latency and traffic-based network energy efficiency are explained below, respectively:

1.1 Latency-based Network Energy Efficiency

The latency-based network energy efficiency refers to the network energy efficiency determined based on the average latency of the network.

Exemplarily, by taking the latency-based network energy efficiency of network slice #1 (e.g., URLLC network slice) as an example, the latency-based network energy efficiency of network slice #1 may satisfy the Formula 1 as follows:

$$EE_{URLLLC,Latency1} = \frac{P_{URLLLC,Latency1}}{EC_{URLLLC,Latency1}} = \frac{1}{\text{Network slice mean latency1*}} \quad \text{Formula 1.}$$

Herein, $EE_{URLLLC,Latency1}$ is the latency-based network energy efficiency of network slice #1 within period #1. $P_{URLLLC,Latency1}$ is the reciprocal of the average latency of network slice #1 within period #1. Network slice mean latency1 is the average latency of network slice #1 in period #1. $EC_{URLLLC,Latency1}$ is the energy consumption of network slice #1 within period #1.

From the above Formula 1, it can be seen that the above $P_{URLLLC,Latency1}$ satisfies the Formula 2 as follows:

$$P_{URLLLC,Latency1} = \frac{1}{\text{Network slice mean latency1}} \quad \text{Formula 2.}$$

Optionally, the above Network slice mean latency1 satisfies the Formula 3 as follows:

$$\text{Network slice mean latency1} = DelayE2EULNs1 + DelayE2EDLNs1 \quad \text{Formula 3}$$

Herein, DelayE2EULNs1 is the uplink average latency of network slice #1 within period #1. DelayE2EDLNs1 is the downlink average latency of network slice #1 within the period #1.

In an example, the above average latency may be the average value of the end-to-end user plane latency of the network slice #1.

It should be pointed out that, the calculation manner for energy consumption of different types of network slices may be the same.

In a possible implementation, the computing device may count latencies of all or part of the packets transmitted in the network slice #1 within the period #1, and determine the average value of the latencies of all or part of the above packets as the average latency.

In an example, the unit of the above network energy efficiency may be 0.1 millisecond*joule (ms*J).

1.2 Latency and Traffic-based Network Energy Efficiency

The latency and traffic-based network energy efficiency refers to the network energy efficiency determined based on the average latency and traffic of the network.

Optionally, the latency and traffic-based network energy efficiency may also be determined based on the average latency and traffic of at least one interface of the network. The traffic of at least one interface may include traffic of an N3 interface and traffic of an N9 interface. By taking the latency and traffic-based network energy efficiency of network slice #2 (e.g., URLLC network service) as an example, the latency and traffic-based network energy efficiency of network slice #2 may satisfy the Formula 4 as follows:

$$EE_{URLLLC,Latency2}=\frac{P_{URLLLC,Latency2}}{EC_{URLLLC,Latency2}}=\frac{w_{N3}*DV_{N3}+w_{N9}*DV_{N9}}{\text{Network slice mean latency2}*EC_{URLLLC,Latency2}} \quad \text{Formula 4.}$$

Herein, $EE_{URLLLC,Latency2}$ is the latency and traffic-based network energy efficiency of network slice #2 within period #2. Network slice mean latency2 is the average latency of the network slice #2 within the period #2. $EC_{URLLLC,Latency2}$ is the energy consumption of the network slice #2 within the period #2. $w_{N3}$ is the weight corresponding to the traffic of the N3 interface. $DV_{N3}$ is the traffic of the N3 interface of the network slice #2 within the period #2. $w_{N9}$ is the weight corresponding to the traffic of the N9 interface. $DV_{N9}$ is the traffic of the N9 interface of the network slice #2 within the period #2.

From the above Formula 4, it can be seen that the above $P_{URLLLC,Latency2}$ satisfies the Formula 5 as follows:

$$P_{URLLLC,Latency2}=\frac{w_{N3}*DV_{N3}+w_{N9}*DV_{N9}}{\text{Network slice mean latency2}} \quad \text{Formula 5.}$$

Optionally, the above Network slice mean latency2 satisfies the Formula 6 as follows:

$$\text{Network slice mean latency2}=DelayE2EULNs2+DelayE2EDLNs2 \quad \text{Formula 6}$$

Herein, DelayE2EULNs2 is the uplink average latency of the network slice #2 within the period #2. DelayE2EDLNs2 is the downlink average latency of the network slice #2 within the period #2.

It should be pointed out that, due to the different average latencies and/or traffic of network slice within busy periods and idle periods, the latency and traffic-based network energy efficiency of network slice is also different within busy periods and idle periods, which makes the above latency and traffic-based network energy efficiency may be applicable to scenarios that the network energy efficiency of network slice in different periods is determined.

3. Reliability

Reliability is an important metric for communication network planning, design, and performance evaluation, which may be used to characterize the degree to which the network can correctly implement its functions according to user requirements and design goals.

In a possible implementation, the above reliability may include four types of reliability as follows: downlink transmission reliability of a Uu interface, uplink transmission reliability of the Uu interface, downlink transmission reliability of an N3 interface, uplink transmission reliability of the N3 interface, latency-based downlink reliability, and latency-based uplink reliability. Different reliability will be explained below, respectively.

2.1. Downlink Transmission Reliability of Uu Interface

The downlink transmission reliability of the Uu interface refers to a proportion of a number of successfully transmitted downlink packets to the total number of downlink packets based on the interface (such as the Uu interface) between the access network device and the terminal device, which may be used to evaluate the impact of the reliability of downlink transmission of the Uu interface on the reliability of the entire network.

In a possible implementation, the downlink transmission reliability of the Uu interface may satisfy the Formula 7 as follows:

$$DLRelPSR\_Uu=\left|\frac{N(T1,drbid)}{N(T1,drbid)+Dloss(T1,drbid)}\right| \quad \text{Formula 7.}$$

Herein, DLRelPSR_Uu is the downlink transmission reliability of the Uu interface within period #3. N(T1,drbid) is a number of successfully transmitted packets within the period #3 based on the interface between the access network device and the terminal device. Dloss(T1,drbid) is a number of unsuccessfully transmitted packets within the period #3 based on the interface between the access network device and the terminal device.

In an optional implementation, the above packet may be a service data unit (SDU) packet with a data radio bearer (DRB) identifier and may be carried on a radio link control protocol (RLC) of a data radio. In this case, N(T1,drbid) is a number of packets that have been transmitted over the air (over-the-air) and obtained a positive response within period #3 based on the Uu interface. Dloss(T1,drbid) is a number of packets that have been transmitted over the air within the period #3 based on the Uu interface but has not obtained a positive response and will not be transmitted again in transmission period #1.

Optionally, if packet #1 has been transmitted over the air within the period #3 but has not received a positive response, but has been transmitted again by an information element or by other information elements in transmission period #1, then the packet #1 cannot be used as the packet counted by the above Dloss(T1,drbid).

It should be pointed out that, the downlink transmission reliability of the above Uu interface may be statistically analyzed at the granularity of network slices, may also be statistically analyzed at the granularity of quality of service (QoS) levels.

2.2. Uplink Data Transmission Reliability of Uu Interface

The uplink transmission reliability of the Uu interface refers to a proportion of a number of successfully transmitted uplink packets to the total number of uplink packets based on the interface (such as the Uu interface) between the terminal device and the access network device, which may be used to evaluate the impact of the reliability of uplink transmission of the Uu interface on the reliability of the entire network.

In a possible implementation, the downlink transmission reliability of the Uu interface may satisfy the Formula 8 as follows:

$$\text{ULRelPSR\_Uu} = \frac{A1}{A2} \qquad \text{Formula 8.}$$

Herein, ULRelPSR_Uu is the downlink transmission reliability of the Uu interface within period #4. A1 is a number of successfully transmitted packets within the period #4 based on the interface between the access network device and the terminal device. A2 is a number of unsuccessfully transmitted packets within the period #4 based on the interface between the access network device and the terminal device.

In an optional implementation, the above packet may be a packet data convergence protocol (PDC) SDU packet. In this case, the A1 is a number of uplink (UL) PDCP sequence numbers successfully received within the period #4 based on the Uu interface. The A2 is a number of all UL PDCP sequence numbers (including sequence numbers from a first PDCP SDU packet to a last PDCP SDU packet transmitted based on the Uu interface within the period #4) transmitted within the period #4 based on the Uu interface.

It should be pointed out that, the uplink transmission reliability of the above Uu interface may be counted at the granularity of cells, may be counted at the granularity of network slices, may also be counted at the granularity of QoS levels, may also be counted at the granularity of the 5th generation quality of service identifiers (5G quality of service identifier, 5QI), and may also be counted at the granularity of QoS class identifiers (QCI) levels.

2.3. Downlink Data Transmission Reliability of N3 Interface

The downlink data transmission reliability of the N3 interface refers to a proportion of a number of successfully transmitted downlink packets to the total number of downlink packets based on the interface between the core network device and the access network device, which may be used to evaluate the impact of the reliability of downlink transmission of the N3 interface on the reliability of the entire network.

In a possible implementation, the downlink transmission reliability of the Uu interface may satisfy the Formula 9 as follows:

$$\text{DLRelPSR\_N3} = \left[ \frac{\text{GTP.OutDataPktN3UPF} - \text{GTP.InDataPktPacketLossN3gNB}}{\text{GTP.OutDataPktN3UPF}} \right] \qquad \text{Formula 9.}$$

Herein, DLRelPSR_N3 is the downlink data transmission reliability of the N3 interface within period #5. GTP.OutDataPktN3UPF is a total number of packets transmitted within the period #5 based on the interface between the core network device and the access network device. GTP.InDataPktPacketLossN3gNB is a number of unsuccessfully transmitted packets within the period #5 based on the interface between the core network device and the access network device.

In an optional implementation, the above packet may be a general data transfer platform (GTP) packet. In this case, GTPOutDataPktN3UPF is a number of packets transmitted from the core network device to the access network device based on the N3 interface within the period #5. GTP.InDataPktPacketLossN3gNB is a number of packets transmitted from the core network device to the access network device within the period #5 but not received by the access network device.

It should be pointed out that, the downlink transmission reliability of the above N3 interface may be counted at the granularity of cells, may also be counted at the granularity of network slices, may also be counted at the granularity of QoS levels, may also be counted at the granularity of 5QI, and may also be counted at the granularity of QoS class identifier (QCI) levels.

2.4. Uplink Data Transmission Reliability of N3 Interface

The uplink transmission reliability of the N3 interface refers to a proportion of a number of successfully transmitted uplink packets to the total number of uplink packets based on the interface between the access network device and the core network device, which may be used to evaluate the impact of the reliability of uplink transmission of the N3 interface on the reliability of the entire network.

In a possible implementation, the downlink transmission reliability of the N3 interface may satisfy the Formula 10 as follows:

$$ULRelPSR\_N3=\left[\frac{GTP.InDataPktN3UPF}{GTP.InDataPktN3UPF+GTP.InDataPktPacketLossN3UPF}\right] \quad \text{Formula 10.}$$

Herein, ULRelPSR_N3 is the uplink transmission reliability of the N3 interface within period #6. GTP.InDataPktN3UPF is a number of successfully transmitted packets within the period #6 based on the interface between the access network device and the core network device. GTP.InDataPktPacketLossN3UPF is a number of unsuccessfully transmitted packets within the period #6 based on the interface between the access network device and the core network device.

In an optional implementation, the above packet may be a GTP packet. In this case, GTP.InDataPktN3UPF is a number of packets received by the core network device from the access network device based on the N3 interface within the period #6. GTP.InDataPktPacketLossN3UPF is a number of packets transmitted from the access network device to the core network device within the period #6 but not received by the core network device.

It should be pointed out that, the uplink transmission reliability of the above N3 interface may be counted at the granularity of cells, may be counted at the granularity of network slices, may also be counted at the granularity of QoS levels, may also be counted at the granularity of 5QIs, and may also be counted at the granularity of QoS class identifiers (QCI) levels.

2.5. Latency-based Uplink Reliability

Latency-based uplink reliability refers to a proportion of a number of successfully transmitted uplink packets with a transmission time being less than or equal to the transmission period #1 to the total number of uplink packets within period #5, that is, a ratio of a number of successfully transmitted uplink packets with a transmission time being less than or equal to the transmission period #1 to the total number of uplink packets transmitted within the period #5.

Optionally, the above transmission period #1 may be set according to the actual situations, for example, the above transmission period #1 is 5 milliseconds (ms).

2.6. Latency-based Downlink Reliability

Latency-based uplink reliability refers to a proportion of a number of successfully transmitted uplink packets with a transmission time being less than or equal to the transmission period #2 to the total number of uplink packets within period #6, that is, a ratio of a number of successfully transmitted uplink packets with a transmission time being less than or equal to the transmission period #2 to the total number of uplink packets transmitted within the period #6.

Optionally, the above transmission period #2 may be the same as the above transmission period #1, for example, both the above transmission period #1 and transmission period #2 are 5ms; the above transmission period #2 may be different from the above transmission period #1, for example, the above transmission period #1 is 5ms, and the above transmission period #2 is 6ms.

Some concepts involved in the embodiments of the present disclosure are briefly introduced in the above.

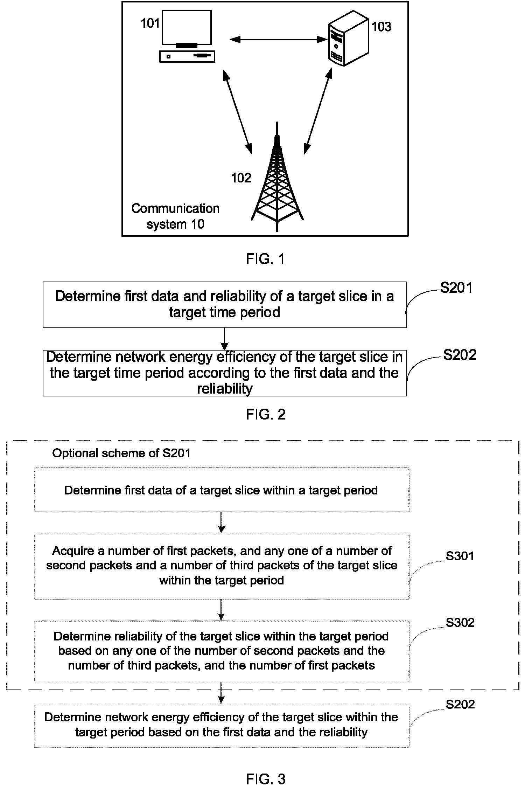

As shown in FIG. 1, FIG. 1 shows a structural schematic diagram of a communication system provided by the embodiments of the present disclosure. The communication system 10 includes a computing device 101, an access network device 102, and a terminal device 103.

The computing device 101 may be a physical server of a communication operator, or may also be a virtual server of a communication operator, such as a cloud server.

The access network device 102 is located at an access network side of the above communication system 10, and it is a device with wireless receiving and transmitting functions or a chip or a chip system that can be set in the device.

In some examples, the access network device 102 includes, but is not limited to: an access point (AP) in a WiFi system, such as a home gateway, a router, a server, a switch, a bridge, etc.; an evolved NodeB (eNB); a radio network controller (RNC); a NodeB (NB); a base station controller (BSC); a base transceiver station (BTS); a home base station (e.g., a home evolved NodeB, or a home NodeB (HNB); a base band unit (BBU); a wireless relay node; a wireless backhaul node; a transmission and reception point (TRP); or a transmission point (TP), etc. The first access network device 50 may also be a 5G base station such as a gNB or a transmission point (TRP or TP) in the new radio (NR) system, or one antenna panel or a group of antenna panels (including a plurality of antenna panels) of a base station in the 5G system. Alternatively, it may also be a network node constituting a gNB or a transmission point, such as a baseband unit (BBU), or be a distributed unit (DU), a road side unit (RSU) with a base station function, or a 5G access network (NG radio access network, NG-Ran) device, etc. The access network device 102 also includes base stations in different networking modes, such as a master evolved NodeB (MeNB) and a secondary eNB (SeNB, or secondary gNB (SgNB)). The access network device 102 also has different types, such as a ground base station, an aerial base station, and a satellite base station.

The terminal device 103 is a device with a wireless communication function. The terminal device 503 may be deployed on land, including indoors or outdoors, handheld or vehicle-mounted, may also deployed on water (e.g., on a ship), etc. The terminal device 103 may also be deployed in air (such as being deployed on an airplane, a balloon, and a satellite).

In some examples, the terminal device 103 is also referred to as a user equipment (UE), a mobile station (MS), a mobile terminal (MT) or a terminal, and it is a device that provides voice and/or data connectivity to users. For example, the terminal device 103 includes a handheld device, a vehicle-mounted device, etc. with a wireless connection function. At present, the terminal device 103 may be: a mobile phone, a tablet computer, a laptop computer, a personal digital assistant (PDA), a mobile internet device (MID), a wearable device (such as a smart watch, a smart bracelet, a pedometer, etc.), a vehicle-mounted device (such as a car, a bicycle, an electric car, an airplane, a ship, a train, a high-speed train, etc.), a virtual reality (VR) device, an augmented reality (AR) device, a wireless terminal in industrial control, a smart home device (such as a refrigerator, a television, an air conditioner and an electric meter), an intelligent robot, a workshop device, a wireless terminal in self-driving, a wireless terminal in remote medical surgery, a wireless terminal in smart grid, a wireless terminal in transportation safety, a wireless terminal in smart city, or a wireless terminal in smart home, a flying device (such as an intelligent robot, a hot air balloon, a drone, an airplane), etc. In a possible application scenario of the present disclosure, the terminal device is a terminal device that generally works on the ground, such as a vehicle-mounted device. In the present disclosure, for the sake of description, a chip deployed in the above-mentioned device, such as a system-on-a-chip (SOC), a baseband chip, etc., or other chips with a communication function may also be referred to as the terminal device 103.

Optionally, the terminal device 103 may be an embedded communication apparatus or a user's handheld communication device, including a mobile phone, a tablet computer, etc.

As an example, in the embodiments of the present disclosure, the terminal device 103 may also be a wearable device. The wearable device may also be referred to as a wearable smart device, which is a general term for wearable devices obtained by performing, with the wearable technology, intelligently design and development on daily wear, such as glasses, gloves, watches, clothing, and shoes. The wearable device is a portable device that is worn directly on the body or integrated into the user's clothing or accessories. The wearable device is not just a hardware device, and it implements powerful functions through software support, data interaction, and cloud interaction. The generalized wearable smart device includes those having comprehensive functions, large size, and capability of achieving complete or partial functions without relying on a smartphone, such as smart watches or smart glasses, as well as those only focusing on a certain type of application function and requiring cooperation with other devices such as smartphones, such as various smart bracelets and smart jewelry for vital sign monitoring.

It should be noted that, FIG. 1 is only an exemplary framework diagram. The number of nodes shown in FIG. 1 is not limited thereto. In addition to the functional nodes shown in FIG. 1, other nodes may also be included, such as a core network device, etc., and the present disclosure is not limited thereto.

The core network device may include at least one of the following network element function entities: an AMF, a session management function (SMF), a UPF, an authentication server function (AUSF), a network slice selection function (NSSF), a network exposure function (NEF), a policy control function (PCF), a unified data management (UDM) function, a trace collection entity (TCE), a multi-cell coordination entity (MCE), and operation, administration, and maintenance (OAM) devices.

Herein, the specific functions of the above network element functional entities are as follows. The AMF is responsible for user's access and mobility management. The SMF is responsible for user's session management. The AUSF is responsible for authenticating 3GPP access and non-3GPP access of a user. The UPF is responsible for user plane processing. The NSSF is responsible for selecting a network slice for a user service. The NEF is responsible for exposing the capabilities of the 5G network to external systems. The PCF is responsible for control over user's policy, including a session policy, a mobility policy, etc. The UDM is responsible for user's contract data management. The OAM device refers to a functional network element that operates, manages, and maintains the communication network according to actual needs of the operator's network operation. Herein, the operation mainly refers to analysis, prediction, planning and configuration performed on services in the communication networks and communications. The management mainly refers to management and monitoring of data in the communication networks. The maintenance mainly refers to test and fault management performed on the services in communication networks and communications.

The computing device 101 is used to determine first data of a target slice within a target period, and reliability of the target slice within the target period, and determine energy efficiency of the target slice within the target period according to the first data and the reliability.

Herein, the first data includes energy consumption. The first data further includes at least one of an average latency and traffic. The reliability is used to characterize a transmission success rate of packets transmitted between the target core network device 102 and the target access network device 103, or the reliability is used to characterize a transmission success rate of packets transmitted from at least one interface of the target slice. The target core network device and the target access network device are both devices in the target slice.

Packets may be transmitted between the target core network device 102 and the target access network device 103.

The communication system 10 provided in the embodiments of the present disclosure may be in various forms, such as: code division multiple access (CDMA), time division multiple access (TDMA), frequency division multiple access (FDMA), orthogonal frequency-division multiple access (OFDMA), single carrier frequency division multiple access (SC-FDMA) and other systems, etc. The term "system" and "network" may be interchangeable. The CDMA system may implement wireless technologies, such as universal terrestrial radio access (UTRA) and CDMA 2000. The UTRA may include a wideband CDMA (WCDMA) technology and other CDMA variant technologies. The CDMA 2000 may cover the interim standard (IS) 2000 (IS-2000), IS-95 standard and IS-856 standard. The TDMA system may implement a wireless technology, such as global system for mobile communications (GSM). The OFDMA system may implement wireless technologies, such as evolved UTRA (E-UTRA), ultra mobile broadband (UMB), IEEE 802.11 (Wi-Fi), IEEE 802.16 (WiMAX), IEEE 802.20, and Flash OFDMA. The UTRA and the E-UTRA are UMTS and a evolved version of the UMTS, respectively. Versions of 3GPP in the long term evolution (LTE) and those versions based on the LTE evolution are new versions of UMTS using E-UTRA. 5G communication system and NR are communication systems currently under research. In addition, the communication system may also be applicable to future-oriented communication technologies, and are applicable to the technical solutions provided by the embodiments of the present disclosure.

Furthermore, the communication system described in the embodiments of the present disclosure are for the purpose of clearly explaining the technical solutions of the embodiments of the present disclosure, and do not constitute a limitation on the technical solutions provided by the embodiments of the present disclosure. The ordinary skilled in the art may know that, with the evolution of the network architectures and the emergence of new communication systems, the technical solutions provided by the embodiments of the present disclosure are also applicable for similar technical problems.

In communication networks, network energy efficiency may affect decisions of operators at a plurality of stages (such as a purchase stage, a design/construction stage, an operation stage, etc.). As can be seen from the above, the network energy efficiency plays a crucial role in enabling operators to acquire actual situations of the network at different stages.

Herein, in the purchase stage, operators may compare energy efficiency of devices from different suppliers based on network energy efficiency, and then choose network devices with higher network energy efficiency.

In the design/construction stage, operators may use the network energy efficiency as a reference factor for designing networks (or subnetworks, or network sites), and may also determine whether to construct networks (or subnetworks, or network sites) based on the network energy efficiency.

In the operation stage, the operator may evaluate the network energy efficiency of the networks (or subnetworks, or network sites) and determine subsequent network decisions regarding network energy efficiency based on the above network energy efficiency.

At present, the determination of network energy efficiency is mainly based on metrics, such as energy consumption, latency, and traffic, etc. However, these metrics cannot fully reflect the actual situations of the network, which may result in the determined network energy efficiency not being able to reflect the actual situations of the network well, leading to operators being unable to make correct decisions based on the above network energy efficiency.

In order to solve the problems existing in prior art, the embodiments of the present disclosure propose a network energy efficiency determination method, which can improve the accuracy of network energy efficiency. As shown in FIG. 2, the method includes the following contents.

S201, a computing device determines first data and reliability of a target slice within a target period.

Herein, the first data includes energy consumption. The first data further includes at least one of an average latency and traffic. The reliability is used to characterize a transmission success rate of packets transmitted between a target core network device and a target access network device, or the reliability is used to characterize a transmission success rate of packets transmitted from at least one interface of the target slice. The target core network device and the target access network device are both devices in the target slice.

In an example, a packet may be transmitted between the target core network device and the target access network device through an N3 interface. The packet may be transmitted between the target core network device and the target access network device through other interfaces, and the present disclosure does not impose any limitations on this.

In a possible implementation, the above average latency may be an average value of all or part of packets transmitted from the target slice within the target period. The above traffic may include: traffic of a first interface of the target slice within the target period, and traffic of a second interface of the target slice within the target period. The above energy consumption may be energy consumption of an access network device and/or a core network device and/or a terminal device in the target slice within the target period.

Optionally, the computing device may set the target periods according to actual situations. For example, the computing device may set the above target period to 30 minutes, and the computing device may also set the above target period to other periods (such as 3 hours). The present disclosure does not impose any limitations on this.

Optionally, the above first data may also include other data, and the present disclosure does not impose any limitations on this.

S202, the computing device determines network energy efficiency of the target slice within the target period according to the first data and the reliability.

As an optional implementation, the implementation process of S202 may be as that: the computing device may first determine performance of a network slice of the target slice within the target period based on the reliability, the average latency, or the reliability, the average latency, and the traffic, and determine a ratio of the performance of the above network slice to the energy consumption of the first data as the network energy efficiency of the target slice within the target period.

As an another optional implementation, the implementation process of S202 may be as that: the computing device may first determine the network energy efficiency of the target slice within the target period based on the reliability, the energy consumption, and the average latency, or the reliability, the energy consumption, the average latency, and the traffic.

Optionally, the manner shown in above FIG. 2 is applicable to determine network energy efficiency of slices. The network energy efficiency determination method provided in the present disclosure may also be applicable to determine the network energy efficiency of a cell, the network energy efficiency of a public land mobile network (PLMN), and the network energy efficiency of a 5QI. The present disclosure does not impose any limitations on this. The implementation process that the computing device determines the network energy efficiency of the cell, the network energy efficiency of the PLMN, and the network energy efficiency of the 5QI may be understood by referring to the descriptions of above S201 to S202, which will not be repeated herein.

The above technical solutions bring about at least beneficial effects as follows. In the network energy efficiency determination method provided by the present disclosure, the computing device may determine the first data (i.e., the energy consumption and the average latency or the energy consumption, the average latency, and the traffic) and the reliability of the target slice within the target period, and determine the network energy efficiency of the target slice within the target period according to the determined first data and reliability. Therefore, in the network energy efficiency determination method provided by the present disclosure, metrics such as energy consumption, latency, and traffic may be combined with reliability to jointly serve as data support for determining the network energy efficiency, which enables the determination of network energy efficiency to more comprehensively and accurately reflect the actual situations of the network, thereby improving the accuracy of network energy efficiency.

In an optional embodiment, as shown in S201, the computing device needs to first determine the reliability of the target slice within the target period in order to provide data support for subsequent computing devices to determine the network energy efficiency. Therefore, based on the method embodiments shown in FIG. 2, the present embodiments provide a possible implementation, as shown in FIG. 3. The implementation process that the computing device determines the reliability of the target slice within the target period may be determined by the following S301 to S302.

S301, the computing device acquires a number of first packets, and any one of a number of second packets, or a number of third packets of the target slice within the target period.

Herein, the number of the first packets is used to characterize a number of packets transmitted based on the target interface. The number of second packets is used to characterize a number of successfully transmitted packets based on the target interface. The number of third packets is used to characterize a number of packets with a latency of the second packet being less than or equal to a preset latency threshold among the second packet. The target interface is an interface between the target core network device and the target access network device.

In a possible implementation, the number of first packets includes a number of uplink first packets and a number of downlink first packets. The uplink first packet is a packet transmitted from the target access network device. The downlink first packet is a packet transmitted from the target access network device. The number of second packets includes a number of uplink second packets and a number of downlink second packets. The uplink second packet is a packet received by the target access network device. The downlink second packet is a packet received by the target core network device. The number of third packets includes a number of uplink third packets and a number of downlink third packets. The uplink third packet is a packet with an uplink latency of the second packet being less than or equal to a first preset latency threshold, among the uplink second packet. The number of downlink third packets is a packet with a downlink latency of the second packet being less than or equal to a second preset latency threshold, among the downlink second packet.

Optionally, the computing device may set the first preset latency threshold and the second preset latency threshold to a same period, for example, the computing device sets both the first preset latency threshold and the second preset latency threshold to 10ms. The computing device may also set the first preset latency threshold and the second preset latency threshold to different periods, for example, the computing device sets the first preset latency threshold to 5ms and the second preset latency threshold to 6ms. It should be pointed out that, the computing device may set the preset latency threshold (or the first preset latency threshold, or the second preset latency threshold) according to the actual situations, and the present disclosure does not impose any limitations on this.

S302, the computing device determines the reliability of the target slice within the target period based on any one of the number of second packets or the number of third packets, and the number of first packets.

Optionally, the computing device may determine the reliability of the target slice within the target period by four implementations. The six implementations will be explained respectively below.

In implementation 1, the reliability satisfies the Formula 11 as follows:

$$Re=(DLA2/DLA1)\times(ULA2/ULA1) \qquad \text{Formula 11.}$$

Herein, the Re is the reliability. The DLA1 is the number of downlink first packets. The DLA2 is the number of downlink second packets. The ULA1 is the number of uplink first packets. The ULA2 is the number of uplink second packets.

In an example, by taking the number of downlink first packets (i.e., DLA1) as 100, the number of downlink second packets (DLA2) as 80, the number of uplink first packets (ULA1) as 80, and the number of uplink second packets (ULA2) as 80 as an example, the computing device may determine the reliability in implementation 1 as 80% (i.e., $(80/100)\times(80/80)$).

In another example, by taking the number of downlink first packets (i.e., DLA1) as 100, the number of downlink second packets (DLA2) as 90, the number of uplink first packets (ULA1) as 90, and the number of uplink second packets (ULA2) as 90 as an example, the computing device may determine the reliability in implementation 1 as 90% (i.e., $(90/100)\times(90/90)$).

In implementation 2, the reliability satisfies the Formula 12 as follows:

$$Re=(DLA2+ULA2)/(DLA1+ULA1) \qquad \text{Formula 12.}$$

In an example, by taking the number of downlink first packets (i.e., DLA1) as 100, the number of downlink second packets (DLA2) as 80, the number of uplink first packets (ULA1) as 80, and the number of uplink second packets (ULA2) as 80 as an example, the computing device may determine the reliability in implementation 1 as 88.9% (i.e., $(80+80)/(100+80)$).

In another example, by taking the number of downlink first packets (i.e., DLA1) as 100, the number of downlink second packets (DLA2) as 90, the number of uplink first packets (ULA1) as 90, and the number of uplink second packets (ULA2) as 90 as an example, the computing device may determine the reliability in implementation 1 as 94.7% (i.e., $(90+90)/(100+90)$).

In implementation 3, the reliability satisfies the Formula 13 as follows:

$$Re=(DLA3/DLA1)\times(ULA3/ULA1) \qquad \text{Formula 13.}$$

In an example, by taking the number of downlink first packets (i.e., DLA1) as 100, the number of downlink third packets (DLA2) as 70, the number of uplink first packets (ULA1) as 70, and the number of uplink third packets (ULA2) as 60 as an example, the computing device may determine the reliability in implementation 3 as 60% (i.e., $(70/100)\times(60/70)$).

In another example, by taking the number of downlink first packets (i.e., DLA1) as 100, the number of downlink third packets (DLA2) as 80, the number of uplink first packets (ULA1) as 80, and the number of uplink third packets (ULA2) as 60 as an example, the computing device may determine the reliability in implementation 3 as 60% (i.e., $(80/100)\times(60/80)$).

In implementation 4, the reliability satisfies the Formula 14 as follows:

$$Re=(DLA3+ULA3)/(DLA1+ULA1) \qquad \text{Formula 14.}$$

In an example, by taking the number of downlink first packets (i.e., DLA1) as 100, the number of downlink third packets (DLA2) as 70, the number of uplink first packets (ULA1) as 70, and the number of uplink third packets (ULA2) as 60 as an example, the computing device may determine the reliability in implementation 3 as 76.5% (i.e., $(70+60)/(100+70)$).

In another example, by taking the number of downlink first packets (i.e., DLA1) as 100, the number of downlink third packets (DLA2) as 80, the number of uplink first packets (ULA1) as 80, and the number of uplink third packets (ULA2) as 60 as an example, the computing device may determine the reliability in implementation 3 as 77.8% (i.e., (80+60)/(100+80)).

Optionally, the above descriptions are only exemplary explanations of the reliability determined by the computing device. The computing device may also determine the reliability of the target slice within the target period by other manners, and the present disclosure does not impose any limitations on this.

The above technical solutions bring about at least beneficial effects as follows. In the network energy efficiency method provided by the present disclosure, the computing device may acquire the number of first packets (i.e., a total number of transmitted packets), and any one of the number of second packets (i.e., a number of successfully transmitted packets), and the number of third packets (i.e., a number of packets with a latency of the second packet being less than or equal to the preset latency threshold among the second packet) of the target slice within the target period, and determine the reliability based on the number of first packets, and any one of the number of second packets, and the number of third packets, providing data support for subsequent computing devices to determine the network energy efficiency based on the reliability.

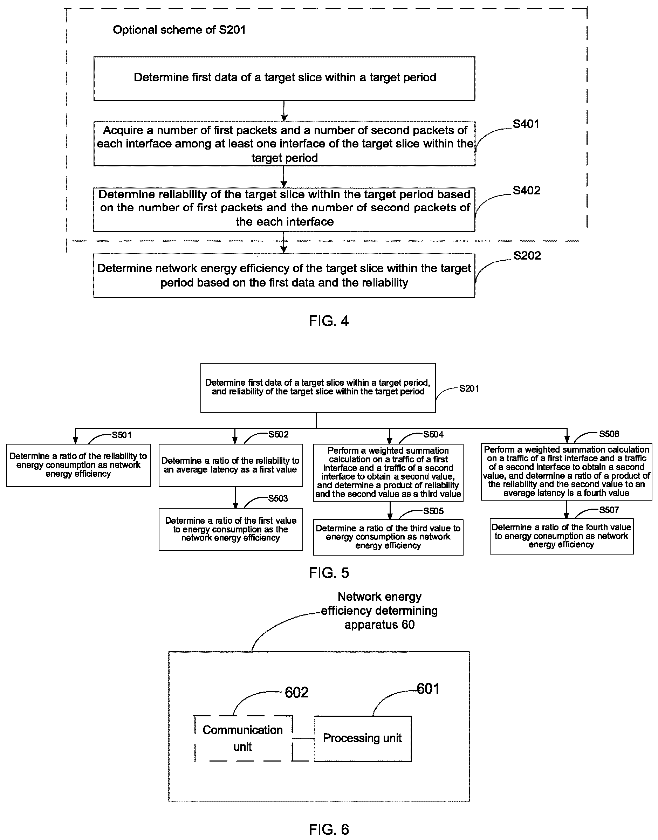

In an optional embodiment, as shown in S201, the computing device needs to first determine the reliability of the target slice within the target period in order to provide data support for subsequent computing devices to determine the network energy efficiency. Therefore, based on the method embodiments shown in FIG. 2, the present embodiments provide a possible implementation, as shown in FIG. 4. The implementation process that the computing device determines the reliability of the target slice within the target period may be determined by the following S401 to S402.

S401, the computing device acquires a number of first packets and a number of second packets of each interface among at least one interface of the target slice within the target period.

Herein, the number of first packets is a number of packets transmitted from any one of ends of the interface to a remaining end of the interface, or the number of first packets is a number of packets transmitted from the any one of ends of the interface to the remaining end of the interface, and with a transmission time being less than or equal to a preset period. The number of second packets is a number of packets transmitted from any one of ends of the interface.

In a possible implementation, the number of first packets includes: a number of uplink first packets and a number of downlink first packets. The number of uplink first packets is a number of packets transmitted from a first end of the interface to a second end of the interface, or the number of uplink first packets is a number of packets transmitted from a first end of the interface to a second end of the interface, and with a transmission time being less than or equal to the preset period. The number of downlink first packets is a number of packets transmitted from a second end of the interface to a first end of the interface, or the number of downlink first packets is a number of packets transmitted from a second end of the interface to a first end, and with a transmission time being less than or equal to the preset period. The number of second packets includes a number of uplink second packets and a number of downlink second packets. The number of uplink second packets is a number of packets transmitted from the first end of the interface. The number of downlink second packets is a number of packets transmitted from the second end of the interface.

In some examples, if the above interface is a Uu interface, a first end of the Uu interface is a terminal device, and a second end of the Uu interface is an access network device. If the above interface is an N3 interface, a first end of the N3 interface is an access network device, and a second end of the N3 interface is a core network device.

Optionally, the computing device may set the preset period for determining a number of different first packets for a same interface as a same period. For example, the computing device sets the preset period for determining the number of uplink first packets for interface #1 and the number of downlink first packets for interface #1 as the same period (e.g., 10ms). The computing device may also set the preset period for determining the number of different first packets for the same interface to different periods. For example, the computing device sets the preset period for determining the number of uplink first packets for interface #1 to 5ms and the preset period for determining the number of downlink first packets for interface #1 to 6ms.

Optionally still, the computing device may set the preset period for determining the number of first packets for different interfaces to the same period. For example, the computing device sets the preset period for determining the number of uplink first packets for interface #2 and the number of uplink first packets for interface #3 to the same period (e.g., 10ms). The computing device may also set the preset period for determining the number of first packets for different interfaces to different periods. For example, the computing device sets the preset period for determining the number of downlink first packets for interface #4 to 7ms and the preset period for determining the number of downlink first packets for interface #5 to 8ms.

It should be pointed out that, the computing device may set the preset period according to actual situations, and the present disclosure does not impose any limitations on this.

S402, the computing device determines the reliability of the target slice within the target period based on the number of first packets and the number of second packets of the each interface.

Optionally, by taking at least one interface including a first interface and a second interface as an example, the computing device may determine the reliability of the target slice within the target period by six implementations. The six implementations will be explained respectively below. In implementation 1, the reliability satisfies the Formula 15 as follows:

$$Re=(DLA1/DLA2)\times(ULA1/ULA2)\times(DLB1/DLB2)\times(ULB1/ULB2) \quad \text{Formula 15.}$$

Herein, the Re is the reliability. The DLA1 is a number of downlink first packets of the first interface. The DLA2 is a number of downlink second packets of the first interface. The ULA1 is a number of uplink first packets of the first interface. The ULA2 is a number of uplink second packets of the first interface. The DLB1 is a number of downlink first packets of the second interface. The DLB2 is a number of downlink second packets of the second interface. The ULB1 is a number of uplink first packets of the second interface. The ULB2 is a number of uplink second packets of the second interface.

In an example (denoted as Example 1), by taking the number of downlink first packets (i.e., DLA1) of the first interface as 80, the number of downlink second packets (DLA2) of the first interface as 100, the number of uplink first packets (ULA1) of the first interface as 80, the number of uplink second packets (ULA2) of the first interface as 80, the number of downlink first packets (DLB1) of the second interface as 100, the number of downlink second packets (DLB2) of the second interface as 150, the number of uplink first packets (ULB1) of the second interface as 80, and the number of uplink second packets (ULB2) of the second interface as 90 as an example, the computing device may determine the reliability (denoted as first reliability) in the implementation 1 as 47.4% (i.e., $(80/100)\times(80/80)\times(100/150)\times(80/90)$).

Combined with the above Example 1, the number of downlink first packets of the first interface may be a number of packets transmitted from a first end of the first interface to a second end of the first interface, or may also be a number of packets transmitted from the first end of the first interface to the second end of the first interface and with a transmission time being less than or equal to 10ms. The number of uplink first packets of the first interface may be a number of packets transmitted from the second end of the first interface to the first end of the first interface, or may also be a number of packets transmitted from the second end of the first interface to the first end of the first interface and with a transmission time being less than or equal to 20ms. The number of downlink first packets of the second interface may be a number of packets transmitted from the first end of the second interface to the second end of the first interface, or may also be a number of packets transmitted from the first end of the second interface to the second end of the first interface and with a transmission time being less than or equal to 5ms. The number of uplink first packets of the second interface may be a number of packets transmitted from the second end of the second interface to the first end of the second interface, or may also be a number of packets transmitted from the second end of the second interface to the first end of the second interface and with a transmission time being less than or equal to 20ms.

Exemplarily, the above first interface may be a Uu interface, and the above second interface may be an N3 interface.

Optionally, in a case where at least one interface includes a first interface and a second interface, the number of downlink first packets of the first interface may be the number of packets transmitted from the first end of the first interface to the second end of the first interface, and with the transmission time being less than or equal to the preset period. The number of uplink first packets of the first interface may be the number of packets transmitted from the second end of the first interface to the first end of the first interface. The number of downlink first packets of the second interface may be the number of packets transmitted from the first end of the second interface to the second end of the first interface, and with the transmission time being less than or equal to the preset period. The number of uplink first packets of the second interface may be the number of packets transmitted from the second end of the second interface to the first end of the second interface.

In implementation 2, the reliability satisfies the Formula 16 as follows:

$$Re=(DLA1+ULB1)/(DLB2+ULA2) \quad \text{Formula 16.}$$

Combined with the above Example 1, the computing device may determine the reliability (denoted as second reliability) in implementation 2 as 66.7% (i.e., $(80+80)/(150+90)$).

In implementation 3, the reliability satisfies the Formula 17 as follows:

$$Re=(DLA1+ULA1+DLB1+ULB1)/(DLA2+ULA2+DLB2+ULB2) \quad \text{Formula 17.}$$

Combined with the above Example 1, the computing device may determine the reliability (denoted as third reliability) in implementation 3 as 81% (i.e., $(80+100+80+80)/(100+150+80+90)$).

In implementation 4, the reliability satisfies the Formula 18 as follows:

$$Re=(DLA1+ULA1)/(DLA2+ULA2)\times(DLB1+ULB1)/(DLB2+ULB2) \quad \text{Formula 18.}$$

Combined with the above Example 1, the computing device may determine the reliability (denoted as fourth reliability) in implementation 4 as 66.7% (i.e., $(80+80)/(100+80)\times(100+80)/(150+90)$).

In implementation 5, the reliability satisfies the Formula 19 as follows:

$$Re=(DLA1+DLB1)/(DLA2+DLB2)\times(ULA1+ULB1)/(ULA2+ULB2) \quad \text{Formula 19.}$$

Combined with the above Example 1, the computing device may determine the reliability (denoted as fifth reliability) in implementation 5 as 67.8% (i.e., $(80+100)/(100+150)\times(80+80)/(80+90)$).

In implementation 6, the reliability satisfies the Formula 20 as follows:

$$Re=(DLA1/DLB2)\times(ULB1/ULA2) \quad \text{Formula 20.}$$

Combined with the above Example 1, the computing device may determine the reliability (denoted as sixth reliability in implementation 6 as 47.4% (i.e., $(80/150)\times(80/90)$).

The above technical solutions bring about at least beneficial effects as follows. In the network energy efficiency method provided by the present disclosure, the computing device may acquire the number of first packets (i.e., the number of successfully transmitted packets) and the number of second packets (i.e., the total number of transmitted packets) of each interface among at least one interface of the target slice within the target period, and determine the reliability based on the number of first packets and the number of second packets of the above each interface. From this, it can be seen that the reliability of the network slice is determined by the number of first packets and the number of second packets of at least one interface in the network energy efficiency determination method provided by the present disclosure. This determined reliability may reflect the reliability of at least one interface of the network slice, thereby improving the accuracy of reliability.

In some optional embodiments, the above first data may be divided into the following four cases. Case 1, the first data includes energy consumption. Case 2, the first data also includes an average latency (i.e., the first data includes the energy consumption and the average latency). Case 3, the first data also includes traffic (i.e., the first data includes the energy consumption and the traffic), and the traffic includes traffic of the first interface and traffic of the second interface. Case 4, the first data also includes an average latency and traffic (i.e., the first data includes the energy consumption, the average latency, and the traffic), and the traffic includes traffic of the first interface and traffic of the second interface. The implementation process that the computing device determines the network energy efficiency varies in different cases. Therefore, the implementation process that the computing device determines the network energy efficiency will be explained respectively in the above four cases.

Case 1, the first data includes energy consumption.

In Case 1, combined with FIG. 2, as shown in FIG. 5, the implementation process that the computing device determines the network energy efficiency may be implemented by the following S501.

S501, the computing device determines a ratio of the reliability to the energy consumption as the network energy efficiency.

As a possible implementation, the implementation process of the above S301 may be that: the computing device may first determine the reliability as the performance (i.e., Pns) of the network slice, and then determine a ratio of a target value to the energy consumption as the network energy efficiency.

Exemplarily, by taking the first reliability as 47.4%, the second reliability as 66.7%, the third reliability as 81%, the fourth reliability as 66.7%, and the energy consumption as 5J as an example, the computing device may determine the network energy efficiency as 0.095 based on the first reliability, the network energy efficiency as 0.13 based on the second reliability, the network energy efficiency as 0.16 based on the third reliability, and the network energy efficiency as 0.13 based on the fourth reliability.

Case 2, the first data includes the energy consumption and an average latency.

In Case 2, combined with FIG. 2, as shown in FIG. 5, the implementation process that the computing device determines the network energy efficiency may be implemented by the following S502 to S503.

S502, the computing device determines a ratio of the reliability to the average latency as a first value.

In an example, by taking the first reliability as 47.4%, the second reliability as 66.7%, the third reliability as 81%, the fourth reliability as 66.7%, and the average latency as 10ms as an example, the computing device may determine a first value (denoted as first value #11) based on the first reliability as 4.74%, a first value (denoted as first value #12) based on the second reliability as 6.67%, a first value (denoted as first value #13) based on the third reliability as 8.1%, and a first value (denoted as first value #14) based on the fourth reliability as 6.67%.

In another example, by taking the first reliability as 47.4%, the second reliability as 66.7%, the third reliability as 81%, the fourth reliability as 66.7%, and the average latency as 1ms as an example, the computing device may determine a first value (denoted as first value #21) based on the first reliability as 47.4%, a first value (denoted as first value #22) based on the second reliability as 66.7%, a first value (denoted as first value #23) based on the third reliability as 81%, and a first value (denoted as first value #24) based on the fourth reliability as 66.7%.

In this case, the first value may be used as the performance (i.e., Pns) of the network slice.

S503, the computing device determines a ratio of the first value to the energy consumption as the network energy efficiency.

In an example, by taking the first value #11 as 4.74%, the first value #12 as 6.67%, the first value #13 as 8.1%, the first value #14 as 6.67%, and the energy consumption as 5J an example, the computing device may determine the network energy efficiency as 0.01356 based on the first value #11, determine the network energy efficiency as 0.013 based on the first value #12, determine the network energy efficiency as 0.016 based on the first value #13, and determine the network energy efficiency as 0.013 based on the first value #14.

In another example, by taking the first value #21 as 47.4%, the first value #22 as 66.7%, the first value #23 as 81%, the first value #24 as 66.7%, and the energy consumption as 10J an example, the computing device may determine the network energy efficiency as 0.0474 based on the first value #21, determine the network energy efficiency as 0.0667 based on the first value #22, determine the network energy efficiency as 0.081 based on the first value #23, and determine the network energy efficiency as 0.0667 based on the first value #24.

Case 3, the first data includes the energy consumption and the traffic.

In Case 3, combined with FIG. 2, as shown in FIG. 5, the implementation process that the computing device determines the network energy efficiency may be implemented by the following S504 to S505.

S504, the computing device performs a weighted summation calculation on the traffic of the first interface and the traffic of the second interface to obtain a second value, and determines that a product of the reliability and the second value is a third value.

As an optional implementation, the implementation process that the computing device determines the second value may be as that: the computing device first determines a product of a weight corresponding to the traffic of the first interface and the traffic of the first interface, and a product of a weight corresponding to the traffic of the second interface and the traffic of the second interface, and then adds the above products to obtain the second value.

In an example (denoted as Example 1), by taking the traffic of the first interface being 1000 bits, the weight corresponding to the traffic of the first interface being 0.9, the traffic of the second interface being 100 bits, and the weight corresponding to the traffic of the second interface being 0.1 as an example, the computing device may determine the second value as 910 (i.e., $0.9 \times 1000 + 0.1 \times 100$) bits.

Combined with the above Example 1, by taking the first reliability as 47.4%, the second reliability as 66.7%, the third reliability as 81%, the fourth reliability as 66.7%, and the second value as 910 bits as an example, the computing device may determine a third value (denoted as third value #1) as 431.34 based on the first reliability and the second value, determine a third value (denoted as third value #2) as 606.97 based on the second reliability and the second value, determine a third value (denoted as third value #3) as 737.1 based on the third reliability and the second value, and determine a third value (denoted as third value #4) as 606.97 based on the fourth reliability and the second value.

In this case, the third value may be used as the performance (i.e., Pns) of the network slice.

Exemplarily, the above first interface may be an N3 interface, and the above second interface may be an N9 interface.

S505, the computing device determines a ratio of the third value to the energy consumption as the network energy efficiency.

Exemplarily, by taking the third value #1 as 431.34, the third value #2 as 606.97, the third value #3 as 737.1, the third value #4 as 606.97, and the energy consumption as 5J as an example, the computing device may determine the network energy efficiency as 86.45 based on the third value #1 and the energy consumption, determine the network energy efficiency as 121.4 based on the third value #2 and the energy consumption, determine the network energy efficiency as 147.4 based on the third value #3 and the energy consumption, and determine the network energy efficiency as 121.4 based on the third value #4 and the energy consumption.

Case 4, the first data includes the energy consumption, the average latency, and the traffic.

In Case 4, combined with FIG. 2, as shown in FIG. 5, the implementation process that the computing device determines the network energy efficiency may be implemented by the following S506 to S507.

S506, the computing device performs a weighted summation calculation on the traffic of the first interface and the traffic of the second interface to obtain a second value, and determines a ratio of the product of the reliability and the second value to the average latency is a fourth value.

In a possible implementation, the traffic of the first interface may be an amount of data transmitted from the target access network device to the target core network device, and the traffic of the second interface may be an amount of data transmitted from the target access network device to the target core network device.

In another example (denoted as Example 2), by taking the traffic of the first interface being 10000 bits, the weight corresponding to the traffic of the first interface being 0.9, the traffic of the second interface being 1000 bits, and the weight corresponding to the traffic of the second interface being 0.1 as an example, the computing device may determine the second value as 9100 (i.e., $0.9 \times 1000 + 0.1 \times 100$) bits.

Combined with the above Example 1, by taking the first reliability as 47.4%, the second reliability as 66.7%, the third reliability as 81%, the fourth reliability as 66.7%, the second value as 910 bits and the average latency as 10ms as an example, the computing device may determine a fourth value (denoted as fourth value #11) as 43.134 based on the first reliability, the second value and the average latency, determine a fourth value (denoted as fourth value #12) as 60.697 based on the second reliability and the second value, determine a fourth value (denoted as fourth value #13) as 73.71 based on the third reliability, the second value and the average latency, and determine a fourth value (denoted as fourth value #14) as 60.697 based on the fourth reliability, the second value and the average latency.

Combined with the above Example 2, by taking the first reliability as 47.4%, the second reliability as 66.7%, the third reliability as 81%, the fourth reliability as 66.7%, the second value as 9100 bits and the average latency as 10ms as an example, the computing device may determine a fourth value (denoted as fourth value #21) as 431.34 based on the first reliability, the second value and the average latency, determine a fourth value (denoted as fourth value #22) as 606.97 based on the second reliability and the second value, determine a fourth value (denoted as fourth value #23) as 737.1 based on the third reliability, the second value and the average latency, and determine a fourth value (denoted as fourth value #24) as 606.97 based on the fourth reliability, the second value and the average latency.

In this case, the fourth value may be used as the performance (i.e., Pns) of the network slice.

S507, the computing device determines a ratio of the fourth value to the energy consumption as the network energy efficiency.

For example, by taking the fourth value #11 as 43.134, the fourth value #12 as 60.697, the fourth value #13 as 73.71, the fourth value #14 as 60.697, the fourth value #15 as 61.698, the fourth value #16 as 43.134, and the energy consumption as 5J as an example, the computing device may determine the network energy efficiency as 8.645 based on the fourth value #11 and the energy consumption, determine the network energy efficiency as 12.14 based on the fourth value #12 and the energy consumption, determine the network energy efficiency as 14.74 based on the fourth value #13 and the energy consumption, and determine the network energy efficiency as 12.14 based on the fourth value #14 and the energy consumption.

In another example, by taking the fourth value #21 as 431.34, the fourth value #22 as 606.97, the fourth value #23 as 737.1, the fourth value #24 as 606.97, and the energy consumption as 5J as an example, the computing device may determine the network energy efficiency as 86.45 based on the fourth value #21 and the energy consumption, determine the network energy efficiency as 121.4 based on the fourth value #22 and the energy consumption, determine the network energy efficiency as 147.4 based on the fourth value #23 and the energy consumption, and determine the network energy efficiency as 121.4 based on the fourth value #24 and the energy consumption.

The above technical solutions bring about at least beneficial effects as follows. In the network energy efficiency determination method provided by the present disclosure, the computing device may determine the network energy consumption based on the energy consumption, the average latency, and the reliability, or the energy consumption, the average latency, the traffic, and the reliability, which provides a plurality of implementations for determining the energy consumption to better adapt to different situations.

It can be understood that, the network energy efficiency determination method may be implemented by the network energy efficiency determination apparatus. In order to implement the above-mentioned functions, the network energy efficiency determination apparatus contains corresponding hardware structures and/or software modules for performing various functions. Those skilled persons in the art should easily realize that the embodiments of the present disclosure may be implemented in the form of hardware or a combination of hardware and computer software in combination with modules and algorithm steps of various examples described in the embodiments of the present disclosure. Depending on the specific application and design constraint conditions of the technical solution, the certain function is executed by hardware or by computer software driving the hardware. Professional technicians may use different methods to implement the described functions for each specific application, but such implementation should not be considered as extending beyond the scope of the embodiments of the present disclosure.

The embodiments of the present disclosure may divide the functional modules of the network energy efficiency determination apparatus according to the above method examples. For example, each functional module may be divided to correspond to one function, or two or more functions may be integrated into a processing module. The integrated module is implemented in the form of hardware or in the form of software functional module. It is noted that the division of the functional modules in the embodiments of the present disclosure is schematic, which only illustrate logical functional division, and there may be other manners to divide the functional modules in actual implementation.

FIG. 6 is a structural schematic diagram of a network energy efficiency determination apparatus provided by the embodiments of the present disclosure. As shown in FIG. 6, the network energy efficiency determination apparatus 60 may be used to perform the network energy efficiency determination method shown in FIG. 2 to FIG. 5. The network energy efficiency determination apparatus 60 includes a processing unit 601.

The processing unit 601 is configured to determine first data and reliability of a target slice within a target period, where the first data includes: energy consumption; the first data further includes at least one of an average latency and traffic; the reliability is used to characterize a transmission success rate of packets transmitted between a target core network device and a target access network device; the target core network device and the target access network device are both devices in the target slice; and the processing unit 601 is further configured to determine network energy efficiency of the target slice within the target period according to the first data and the reliability.

In a possible implementation, the network energy efficiency determination apparatus further includes: a communication unit 602. The communication unit 602 is configured to acquire a number of first packets, and any one of a number of second packets, and a number of third packets of the target slice within the target period, where the number of first packets is used to characterize a number of packets transmitted based on a target interface; the number of second packets is used to characterize a number of successfully transmitted packets based on the target interface; the number of third packets is used to characterize a number of packets with a latency of the second packet being less than or equal to a preset latency threshold, among the second packet; and the target interface is an interface between the target core network device and the target access network device; and the processing unit 601 is further configured to determine the reliability of the target slice within the target period based on any one of the number of the second packets and the number of the third packets, and the number of the first packets.

In a possible implementation, the number of first packets includes: a number of uplink first packets and a number of downlink first packets; the uplink first packet is a packet transmitted from the target access network device; the downlink first packet is a packet transmitted from the target access network device; the number of second packets includes a number of uplink second packets and a number of downlink second packets; the uplink second packet is a packet received by the target access network device; the downlink second packet is a packet received by the target core network device; the number of third packets includes a number of uplink third packets and a number of downlink third packets; the uplink third packet is a packet with an uplink latency of the second packet being less than or equal to a first preset latency threshold among, the uplink second packet; the number of downlink third packets is a packet with a downlink latency of the second packet being less than or equal to a second preset latency threshold, among the downlink second packet.

In a possible implementation, the reliability satisfies a formula as follows:

$$Re = (DLA2/DLA1) \times (ULA2/ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re = (DLA2 + ULA2)/(DLA1 + ULA1).$$

Herein, the Re is the reliability; the DLA1 is the number of downlink first packets; the DLA2 is the number of downlink second packets; the ULA1 is the number of uplink first packets; and the ULA2 is the number of uplink second packets.

In a possible implementation, the reliability satisfies a formula as follows:

$$Re = (DLA3/DLA1) \times (ULA3/ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, the reliability satisfies a formula as follows:

$$Re = (DLA3 + ULA3)/(DLA1 + ULA1).$$

Herein, the Re is the reliability; the DLA1 is the number of downlink first packets; the DLA3 is the number of downlink third packets; the ULA1 is the number of uplink first packets; and the ULA3 is the number of uplink third packets.

In a possible implementation, the network energy efficiency determination apparatus further includes: a communication unit 602. The communication unit 602 is further configured to acquire a number of first packets and a number of second packets of each interface among the at least one interface of the target slice within the target period, where the number of first packets is a number of packets transmitted from any one of ends of the interface to a remaining end of the interface, or the number of first packets is a number of packets transmitted from the any one of ends to the remaining end, and with a transmission time being less than or equal to a preset period; and the number of second packets is a number of packets transmitted from the any one of ends; and the processing unit 601 is further configured to determine the reliability of the target slice within the target period based on the number of first packets and the number of second packets of the each interface.

In a possible implementation, the number of first packets includes a number of uplink first packets and a number of downlink first packets; the number of uplink first packets is a number of packets transmitted from a first end of the interface to a second end of the interface, or the number of uplink first packets is a number of packets transmitted from the first end to the second end, and with a transmission time being less than or equal to the preset period; the number of downlink first packets is a number of packets transmitted from the second end to the first end, or the number of downlink first packets is a number of packets transmitted from the second end to the first end, and with the transmission time being less than or equal to the preset period; the number of second packets includes a number of uplink second packets and a number of downlink second packets; the number of uplink second packets is a number of packets transmitted from the first end; and the number of downlink second packets is a number of packets transmitted from the second end.

In a possible implementation, the at least one interface includes a first interface and a second interface, and the reliability satisfies a formula as follows:

$$Re=(DLA1/DLA2)\times(ULA1/ULA2)\times(DLB1/DLB2)\times(ULB1/ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ULB1)/(DLB2+ULA2).$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, the at least one interface includes a first interface and a second interface, and the reliability satisfies a formula as follows:

$$Re=(DLA1+ULA1+DLB1+ULB1)/(DLA2+ULA2+DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1 +ULA1)/(DLA2+ ULA2)\times(DLB1+ULB1)/(DLB2+ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1+ DLB1)/(DLA2+ DLB2)\times(ULA1+ ULB1)/(ULA2+ ULB2).$$

Herein, the Re is the reliability; the DLA1 is the number of downlink first packets of the first interface; the DLA2 is the number of downlink second packets of the first interface; the ULA1 is the number of uplink first packets of the first interface; the ULA2 is the number of uplink second packets of the first interface; the DLB1 is the number of downlink first packets of the second interface; the DLB2 is the number of downlink second packets of the second interface; the ULB1 is the number of uplink first packets of the second interface; and the ULB2 is the number of uplink second packets of the second interface.

In a possible implementation, the at least one interface includes a first interface and a second interface, and the reliability satisfies a formula as follows:

$$Re=(DLA1/DLB2)\times(ULB1/ULA2);$$

Herein, the Re is the reliability; the DLA1 is the number of downlink first packets of the first interface; the ULA2 is the number of uplink second packets of the first interface; the DLB2 is the number of downlink second packets of the second interface; and the ULB1 is the number of uplink first packets of the second interface.

In a possible implementation, in a case where the first data includes the energy consumption, the processing unit 601 is further configured to determine a ratio of the reliability to the energy consumption as the network energy efficiency.

In a possible implementation, in the case where in a case where the first data further includes the average latency, the processing unit 601 is further configured to determine a ratio of the reliability to the average latency as a first value; the processing unit 601 is further configured to determine a ratio of the first value to the energy consumption as the network energy efficiency.

In a possible implementation, in a case where the first data further includes the traffic, and the traffic includes traffic of the first interface and traffic of the second interface, the processing unit 601 is further configured to perform a weighted summation calculation on the traffic of the first interface and the traffic of the second interface to obtain a second value, and determine a product of the reliability and the second value as a third value; and the processing unit 601 is further configured to determine a ratio of the third value to the energy consumption as the network energy efficiency.

In a possible implementation, in a case where the first data further includes the average latency and the traffic, and the traffic includes traffic of the first interface and traffic of the second interface, the processing unit 601 is further configured to perform a weighted summation calculation on the traffic of the first interface and the traffic of the second interface to obtain a second value, and determine a ratio of a product of the reliability and the second value, to the average latency, as a fourth value; the processing unit 601 is further configured to determine a ratio of the fourth value to the energy consumption as the network energy efficiency.

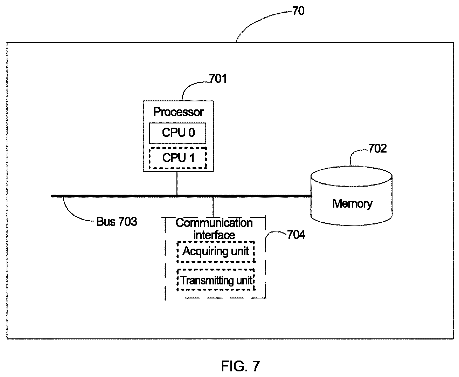

In a case where the functions of the integrated modules are implemented in the form of hardware, the embodiments of the present disclosure provide a possible structural schematic diagram of a network energy efficiency determination apparatus involved in the above-mentioned embodiments. As shown in FIG. 7, the network energy efficiency determination apparatus 70, for example, is used to perform the network energy efficiency determination method shown in FIG. 2 to FIG. 5. The network energy efficiency determination apparatus 70 includes a processor 701, a memory 702, and a bus 703. The processor 701 and the memory 702 are connected via the bus 703. Optionally, the network energy efficiency determination apparatus 70 may also include a communication interface 704.

The processor 701 is a control center of the user equipment, which may be a processor or a collective term for a plurality of processing elements. For example, the processor 701 may be a general-purpose central processing unit (CPU) 702, or other general-purpose processors. Herein, the general-purpose processor may be microprocessors, or may be any conventional processors.

As an embodiment, the processor 701 may include one or more CPUs, such as CPU0 and CPU1 in FIG. 7.

The memory 702 may be a read-only memory (ROM), or other static storage devices that may store static information and instructions, a random access memory (RAM), or other dynamic storage devices that may store information and instructions, or an electrically erasable programmable read-only memory (EEPROM), a magnetic disk storage medium or other magnetic storage device, or any other medium that can be used to carry or store desired program codes in the form of instructions or data structures and can be accessed by a computer, but it is not limited thereto.

As a possible implementation, the memory 702 may exist independently of the processor 701, and the memory 702 may be connected to the processor 701 via the bus 703 for storing instructions or program codes. When the processor 701 revokes and executes the instructions or program codes stored in the memory 702, the map plotting method provided by the embodiments of the present disclosure may be implemented.

In another possible implementation, the memory 702 may be integrated with the processor 701.

The bus 703 may be an Industry Standard Architecture (ISA) bus, a Peripheral Component Interconnect (PCI) bus, or an Extended Industry Standard Architecture (EISA) bus. This bus may be divided into address bus, data bus, control bus, etc. For ease of representation, only one thick line is used in FIG. 7, but it does not show that there is only one bus or one type of bus.

The communication interface 704 is used for connection with other devices through a communication network. The communication network may be Ethernet, wireless access network, wireless local area networks (WLAN), etc. The communication interface 704 may include a communication unit 702 for receiving data.

In a design, in the network energy efficiency determination apparatus 70 provided by the embodiments of the present disclosure, the communication interface may also be integrated into the processor.

It should be pointed out that, the structure shown in FIG. 7 does not constitute a limitation on the network energy efficiency confirmation apparatus 70. In addition to the components shown in FIG. 7, the network energy efficiency determination apparatus 70 may include more or fewer components than those illustrated, or combine certain components, or arrange the components in different ways.

As an example, combined with FIG. 7, the processing unit 701 in the network energy efficiency determination apparatus implements the same functions as the processor 701 in FIG. 7.

From the description of the above implementations, those skilled in the art will clearly understand that, for convenience and brevity of description, the division of the various functional modules are exemplary. In practical applications, the above-mentioned functions are allocated to different functional modules as needed. For the specific working procedure of the above-described system, apparatus, and unit, reference may be made to the corresponding procedures in the aforementioned method embodiments, which will not repeated herein.

The present embodiment provides a communication system, the communication system may include a computing device, an access network device, and a terminal device. The computing device is used to determine the first data of the target slice within the target period, and the reliability of the target slice within the target period (i.e., used to characterize the transmission success rate of the packets transmitted between the access network device and the terminal device) and determine the energy efficiency of the target slice within the target period according to the first data and the reliability, to perform the network energy efficiency determination method provided by the embodiments of the present disclosure. For specific descriptions of the computing device, the access network device, and the terminal device, reference may be made to the relevant descriptions in the above method embodiments and apparatus embodiments, which will not be repeated herein.

The embodiments of the present disclosure provide a computer program product containing instructions, and the computer program product, when executed a computer, causes the computer to perform the network energy efficiency determination method described in the above method embodiments.

The embodiments of the present disclosure also provide a computer readable storage medium having instructions stored therein and the instructions, when being executed by the computing device, cause the computing device to perform various steps performed by the computing device in the method flow shown in the above method embodiments.

Herein, the computer readable storage medium may be, for example, but is not limited to, an electronic, magnetic, optical, electromagnetic, infrared, or semiconductor system, apparatus or device, or any combination thereof. More specific examples (non-exhaustive list) of the computer readable storage medium include: electrical connections with one or more conductors, portable computer disks, hard disks, random access memories (RAM), read only memories (ROM), erasable programmable read only memories (EPROM), registers, hard disks, optical fiber, portable compact read-only memories (CD-ROM), optical storage devices, magnetic storage devices or any suitable combination thereof, or any other form of computer readable storage medium known in the art. An exemplary storage medium is coupled to the processor such that the processor may read information therefrom, and write information thereto. Of course, the storage medium may also be an integral part of the processor. The processor and the storage medium may reside in an application specific integrated circuit (ASIC). In the embodiments of the present disclosure, the computer readable storage medium may be any tangible medium that containing or storing a program for use by or in connection with an instruction execution system, apparatus, or device.

There are only specific implementations of the present disclosure above, but the protection scope of the present disclosure is not limited thereto. Any changes or replacements within the technical scope disclosed in the present disclosure shall fall within the protection scope of the present disclosure. Therefore, the protection scope of the present disclosure shall be subject to the protection scope of the claims.

**Claims**

1. A network energy efficiency determination method, **characterized by** comprising:

   determining first data and reliability of a target slice within a target period, wherein the first data comprises: energy consumption; the first data further comprises at least one of an average latency and traffic; the reliability is used to characterize a transmission success rate of packets transmitted between a target core network device and a target access network device, or the reliability is used to characterize a transmission success rate of packets transmitted from at least one interface of the target slice; the target core network device and the target access network device are both devices in the target slice; and
   determining network energy efficiency of the target slice within the target period according to the first data and the reliability.

2. The method according to claim 1, wherein determining the reliability of the target slice within the target period comprises:

acquiring a number of first packets, and any one of a number of second packets, and a number of third packets of the target slice within the target period, wherein the number of first packets is used to characterize a number of packets transmitted based on a target interface; the number of second packets is used to characterize a number of successfully transmitted packets based on the target interface; the number of third packets is used to characterize a number of packets with a latency of the second packet being less than or equal to a preset latency threshold, among the second packet; and the target interface is an interface between the target core network device and the target access network device; and

determining the reliability of the target slice within the target period based on any one of the number of the second packets and the number of the third packets, and the number of the first packets.

3. The method according to claim 2, wherein the number of first packets comprises: a number of uplink first packets and a number of downlink first packets; the uplink first packet is a packet transmitted from the target access network device; the downlink first packet is a packet transmitted from the target access network device; the number of second packets comprises a number of uplink second packets and a number of downlink second packets; the uplink second packet is a packet received by the target access network device; the downlink second packet is a packet received by the target core network device; the number of third packets comprises a number of uplink third packets and a number of downlink third packets; the uplink third packet is a packet with an uplink latency of the second packet being less than or equal to a first preset latency threshold, among the uplink second packet; the number of downlink third packets is a packet with a downlink latency of the second packet being less than or equal to a second preset latency threshold, among the downlink second packet.

4. The method according to claim 3, wherein the reliability satisfies a formula as follows:

$$Re=(DLA2/DLA1)\times(ULA2/ULA1);$$

wherein the Re is the reliability; the DLA1 is the number of downlink first packets; the DLA2 is the number of downlink second packets; the ULA1 is the number of uplink first packets; and the ULA2 is the number of uplink second packets.

5. The method according to claim 3, wherein the reliability satisfies a formula as follows:

$$Re=(DLA2+ULA2)/(DLA1+ULA1);$$

wherein the Re is the reliability; the DLA1 is the number of downlink first packets; the DLA2 is the number of downlink second packets; the ULA1 is the number of uplink first packets; and the ULA2 is the number of uplink second packets.

6. The method according to claim 3, wherein the reliability satisfies a formula as follows:

$$Re=(DLA3/DLA1)\times(ULA3/ULA1);$$

wherein the Re is the reliability; the DLA1 is the number of downlink first packets; the DLA3 is the number of downlink third packets; the ULA1 is the number of uplink first packets; and the ULA3 is the number of uplink third packets.

7. The method according to claim 3, wherein the reliability satisfies a formula as follows:

$$Re=(DLA3+ULA3)/(DLA1+ULA1);$$

wherein the Re is the reliability; the DLA1 is the number of downlink first packets; the DLA3 is the number of downlink third packets; the ULA1 is the number of uplink first packets; and the ULA3 is the number of uplink third packets.

8. The method according to claim 1, wherein determining the reliability of the target slice within the target period comprises:

acquiring a number of first packets and a number of second packets of each interface among the at least one interface of the target slice within the target period, wherein the number of first packets is a number of packets transmitted from any one of ends of the interface to a remaining end of the interface, or the number of first packets is a number of packets transmitted from the any one of ends to the remaining end, and with a transmission time being less than or equal to a preset period; and the number of second packets is a number of packets transmitted from the any one of ends; and
determining the reliability of the target slice within the target period based on the number of first packets and the number of second packets of the each interface.

9. The method according to claim 8, wherein the number of first packets comprises a number of uplink first packets and a number of downlink first packets; the number of uplink first packets is a number of packets transmitted from a first end of the interface to a second end of the interface, or the number of uplink first packets is a number of packets transmitted from the first end to the second end, and with a transmission time being less than or equal to the preset period; the number of downlink first packets is a number of packets transmitted from the second end to the first end, or the number of downlink first packets is a number of packets transmitted from the second end to the first end, and with the transmission time being less than or equal to the preset period; the number of second packets comprises a number of uplink second packets and a number of downlink second packets; the number of uplink second packets is a number of packets transmitted from the first end; and the number of downlink second packets is a number of packets transmitted from the second end.

10. The method according to claim 9, wherein the at least one interface comprises a first interface and a second interface, and the reliability satisfies a formula as follows:

$$Re=(DLA1/DLA2)\times(ULA1/ULA2)\times(DLB1/DLB2)\times(ULB1/ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

11. The method according to claim 9, wherein the at least one interface comprises a first interface and a second interface, and the reliability satisfies a formula as follows:

$$Re=(DLA1+ULB1)/(DLB2+ULA2);$$

wherein the Re is the reliability; the DLA1 is a number of downlink first packets of the first interface; the ULA2 is a number of uplink second packets of the first interface; the DLB2 is a number of downlink second packets of the second interface; and the ULB1 is a number of uplink first packets of the second interface.

12. The method according to claim 9, wherein the at least one interface comprises a first interface and a second interface, and the reliability satisfies a formula as follows:

$$Re=(DLA1+ULA1+DLB1+ULB1)/(DLA2+ULA2+DLB2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

13. The method according to claim 9, wherein the at least one interface comprises a first interface and a second interface, and the reliability satisfies a formula as follows:

$$Re=(DLA1+ULA1)/(DLA2+ULA2) \times (DLB1+ULB1)/(DLB2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

14. The method according to claim 9, wherein the at least one interface comprises a first interface and a second interface, and the reliability satisfies a formula as follows:

$$Re=(DLA1+DLB1)/(DLA2+DLB2) \times (ULA1+ULB1)/(ULA2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

15. The method according to claim 9, wherein the at least one interface comprises a first interface and a second interface, and the reliability satisfies a formula as follows:

$$Re=(DLA1/DLB2) \times (ULB1/ULA2);$$

wherein the Re is the reliability; the DLA1 is a number of downlink first packets of the first interface; the ULA2 is a number of uplink second packets of the first interface; the DLB2 is a number of downlink second packets of the second interface; and the ULB1 is a number of uplink first packets of the second interface.

16. The method according to any one of claims 1 to 15, wherein in a case where the first data comprises the energy consumption, determining the network energy efficiency of the target slice within the target period based on the first data and the reliability comprises:
determining a ratio of the reliability to the energy consumption as the network energy efficiency.

17. The method according to any one of claims 1 to 15, wherein in a case where the first data further comprises the average latency, determining the network energy efficiency of the target slice within the target period based on the first data and the reliability comprises:

determining a ratio of the reliability to the average latency as a first value; and
determining a ratio of the first value to the energy consumption as the network energy efficiency.

18. The method according to any one of claims 1 to 15, wherein in a case where the first data further comprises the traffic, and the traffic comprises traffic of a first interface and traffic of a second interface, determining the network energy efficiency of the target slice within the target period based on the first data and the reliability comprises:

performing a weighted summation calculation on the traffic of the first interface and the traffic of the second interface to obtain a second value, and determining a product of the reliability and the second value as a third value; and
determining a ratio of the third value to the energy consumption as the network energy efficiency.

19. The method according to any one of claims 1 to 15, wherein in a case where the first data further comprises the average latency and the traffic, and the traffic comprises traffic of a first interface and traffic of a second interface, determining the network energy efficiency of the target slice within the target period based on the first data and the reliability comprises:

performing a weighted summation calculation on the traffic of the first interface and the traffic of the second interface to obtain a second value, and determining a ratio of a product of the reliability and the second value, to the average latency, as a fourth value; and

determining a ratio of the fourth value to the energy consumption as the network energy efficiency.

20. A network energy efficiency determination apparatus, **characterized in that** the apparatus comprises: a processing unit;

the processing unit is configured to determine first data and reliability of a target slice within a target period, wherein the first data comprises: energy consumption; the first data further comprises at least one of an average latency and traffic; the reliability is used to characterize a transmission success rate of packets transmitted between a target core network device and a target access network device, or the reliability is used to characterize a transmission success rate of packets transmitted from at least one interface of the target slice; the target core network device and the target access network device are both devices in the target slice; and

the processing unit is further configured to determine network energy efficiency of the target slice within the target period according to the first data and the reliability.

21. The apparatus according to claim 20, wherein the apparatus further comprises: a communication unit;

the communication unit is configured to acquire a number of first packets, and any one of a number of second packets, and a number of third packets of the target slice within the target period, wherein the number of first packets is used to characterize a number of packets transmitted based on a target interface; the number of second packets is used to characterize a number of successfully transmitted packets based on the target interface; the number of third packets is used to characterize a number of packets with a latency of the second packet being less than or equal to a preset latency threshold, among the second packet; and the target interface is an interface between the target core network device and the target access network device; and

the processing unit is further configured to determine the reliability of the target slice within the target period based on any one of the number of the second packets and the number of the third packets, and the number of the first packets.

22. The apparatus according to claim 21, wherein the number of first packets comprises: a number of uplink first packets and a number of downlink first packets; the uplink first packet is a packet transmitted from the target access network device; the downlink first packet is a packet transmitted from the target access network device; the number of second packets comprises a number of uplink second packets and a number of downlink second packets; the uplink second packet is a packet received by the target access network device; the downlink second packet is a packet received by the target core network device; the number of third packets comprises a number of uplink third packets and a number of downlink third packets; the uplink third packet is a packet with an uplink latency of the second packet being less than or equal to a first preset latency threshold, among the uplink second packet; the number of downlink third packets is a packet with a downlink latency of the second packet being less than or equal to a second preset latency threshold, among the downlink second packet.

23. The apparatus according to claim 22, wherein the reliability satisfies a formula as follows:

$$Re=(DLA2/DLA1) \times (ULA2/ULA1);$$

wherein the Re is the reliability; the DLA1 is the number of downlink first packets; the DLA2 is the number of downlink second packets; the ULA1 is the number of uplink first packets; and the ULA2 is the number of uplink second packets.

24. The apparatus according to claim 22, wherein the reliability satisfies a formula as follows:

$$Re=(DLA2+ULA2)/(DLA1+ULA1);$$

wherein the Re is the reliability; the DLA1 is the number of downlink first packets; the DLA2 is the number of downlink second packets; the ULA1 is the number of uplink first packets; and the ULA2 is the number of uplink second packets.

25. The apparatus according to claim 22, wherein the reliability satisfies a formula as follows:

$$Re=(DLA3/DLA1) \times (ULA3/ULA1);$$

wherein the Re is the reliability; the DLA1 is the number of downlink first packets; the DLA3 is the number of downlink third packets; the ULA1 is the number of uplink first packets; and the ULA3 is the number of uplink third packets.

26. The apparatus according to claim 22, wherein the reliability satisfies a formula as follows:

$$Re=(DLA3+ULA3)/(DLA1+ULA1);$$

wherein the Re is the reliability; the DLA1 is the number of downlink first packets; the DLA3 is the number of downlink third packets; the ULA1 is the number of uplink first packets; and the ULA3 is the number of uplink third packets.

27. The apparatus according to claim 20, wherein the apparatus further comprises: a communication unit;

the communication unit is further configured to acquire a number of first packets and a number of second packets of each interface among the at least one interface of the target slice within the target period, wherein the number of first packets is a number of packets transmitted from any one of ends of the interface to a remaining end of the interface, or the number of first packets is a number of packets transmitted from the any one of ends to the remaining end, and with a transmission time being less than or equal to a preset period; and the number of second packets is a number of packets transmitted from the any one of ends; and
the processing unit is further configured to determine the reliability of the target slice within the target period based on the number of first packets and the number of second packets of the each interface.

28. The apparatus according to claim 27, wherein the number of first packets comprises a number of uplink first packets and a number of downlink first packets; the number of uplink first packets is a number of packets transmitted from a first end of the interface to a second end of the interface, or the number of uplink first packets is a number of packets transmitted from the first end to the second end, and with a transmission time being less than or equal to the preset period; the number of downlink first packets is a number of packets transmitted from the second end to the first end, or the number of downlink first packets is a number of packets transmitted from the second end to the first end, and with the transmission time being less than or equal to the preset period; the number of second packets comprises a number of uplink second packets and a number of downlink second packets; the number of uplink second packets is a number of packets transmitted from the first end; and the number of downlink second packets is a number of packets transmitted from the second end.

29. The apparatus according to claim 28, wherein the at least one interface comprises a first interface and a second interface, and the reliability satisfies a formula as follows:

$$Re=(DLA1/DLA2) \times (ULA1/ULA2) \times (DLB1/DLB2) \times (ULB1/ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

30. The apparatus according to claim 28, wherein the at least one interface comprises a first interface and a second interface, and the reliability satisfies a formula as follows:

$$Re=(DLA1+ULB1)/(DLB2+ULA2);$$

wherein the Re is the reliability; the DLA1 is a number of downlink first packets of the first interface; the ULA2 is a number of uplink second packets of the first interface; the DLB2 is a number of downlink second packets of the second interface; and the ULB1 is a number of uplink first packets of the second interface.

31. The apparatus according to claim 28, wherein the at least one interface comprises a first interface and a second interface, and the reliability satisfies a formula as follows:

$$Re=(DLA1+ULA1+DLB1+ULB1)/(DLA2+ULA2+DLB2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

32. The apparatus according to claim 28, wherein the at least one interface comprises a first interface and a second interface, and the reliability satisfies a formula as follows:

$$Re=(DLA1+ULA1)/(DLA2+ULA2)\times(DLB1+ULB1)/(DLB2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

33. The apparatus according to claim 28, wherein the at least one interface comprises a first interface and a second interface, and the reliability satisfies a formula as follows:

$$Re=(DLA1+DLB1)/(DLA2+DLB2)\times(ULA1+ULB1)/(ULA2+ULB2);$$

wherein the Re is the reliability; the DLA1 is a number of downlink first packets of the first interface; the DLA2 is a number of downlink second packets of the first interface; the ULA1 is a number of uplink first packets of the first interface; the ULA2 is a number of uplink second packets of the first interface; the DLB1 is a number of downlink first packets of the second interface; the DLB2 is a number of downlink second packets of the second interface; the ULB1 is a number of uplink first packets of the second interface; and the ULB2 is a number of uplink second packets of the second interface.

34. The apparatus according to claim 28, wherein the at least one interface comprises a first interface and a second interface, and the reliability satisfies a formula as follows:

$$Re=(DLA1/DLB2)\times(ULB1/ULA2);$$

wherein the Re is the reliability; the DLA1 is a number of downlink first packets of the first interface; the ULA2 is a number of uplink second packets of the first interface; the DLB2 is a number of downlink second packets of the second interface; and the ULB1 is a number of uplink first packets of the second interface.

35. The apparatus according to any one of claims 20 to 34, wherein in a case where the first data comprises the energy consumption,
the processing unit is further configured to determine a ratio of the reliability to the energy consumption as the network energy efficiency.

36. The apparatus according to any one of claims 20 to 34, wherein in a case where the first data further comprises the average latency,

the processing unit is further configured to determine a ratio of the reliability to the average latency as a first value;
the processing unit is further configured to determine a ratio of the first value to the energy consumption as the network energy efficiency.

**37.** The apparatus according to any one of claims 20 to 34, wherein in a case where the first data further comprises the traffic, and the traffic comprises traffic of a first interface and traffic of a second interface,

the processing unit is further configured to perform a weighted summation calculation on the traffic of the first interface and the traffic of the second interface to obtain a second value, and determine a product of the reliability and the second value as a third value;

the processing unit is further configured to determine a ratio of the third value to the energy consumption as the network energy efficiency.

**38.** The apparatus according to any one of claims 20 to 34, wherein in a case where the first data further comprises the average latency and the traffic, and the traffic comprises traffic of a first interface and traffic of a second interface,

the processing unit is further configured to perform a weighted summation calculation on the traffic of the first interface and the traffic of the second interface to obtain a second value, and determine a ratio of a product of the reliability and the second value, to the average latency, as a fourth value;

the processing unit is further configured to determine a ratio of the fourth value to the energy consumption as the network energy efficiency.

**39.** A network energy efficiency determination apparatus, **characterized by** comprising a processor and a communication interface, wherein the communication interface is coupled with the processor, and the processor is configured to execute a computer program or instructions to implement the network energy efficiency determination method according to any one of claims 1 to 19.

**40.** A computer readable storage medium having instructions stored therein, **characterized in that** the instructions, when executed by a computer, cause the computer to perform the network energy efficiency determination method according to any one of claims 1 to 19.

FIG. 1

| Determine first data and reliability of a target slice in a target time period | ─S201 |

| Determine network energy efficiency of the target slice in the target time period according to the first data and the reliability | ─S202 |

FIG. 2

Optional scheme of S201

Determine first data of a target slice within a target period

| Acquire a number of first packets, and any one of a number of second packets and a number of third packets of the target slice within the target period | S301 |

| Determine reliability of the target slice within the target period based on any one of the number of second packets and the number of third packets, and the number of first packets | S302 |

| Determine network energy efficiency of the target slice within the target period based on the first data and the reliability | S202 |

FIG. 3

Optional scheme of S201

Determine first data of a target slice within a target period

Acquire a number of first packets and a number of second packets of each interface among at least one interface of the target slice within the target period — S401

Determine reliability of the target slice within the target period based on the number of first packets and the number of second packets of the each interface — S402

Determine network energy efficiency of the target slice within the target period based on the first data and the reliability — S202

FIG. 4

Determine first data of a target slice within a target period, and reliability of the target slice within the target period — S201

Determine a ratio of the reliability to energy consumption as network energy efficiency — S501

Determine a ratio of the reliability to an average latency as a first value — S502

Determine a ratio of the first value to energy consumption as the network energy efficiency — S503

Perform a weighted summation calculation on a traffic of a first interface and a traffic of a second interface to obtain a second value, and determine a product of reliability and the second value as a third value — S504

Determine a ratio of the third value to energy consumption as network energy efficiency — S505

Perform a weighted summation calculation on a traffic of a first interface and a traffic of a second interface to obtain a second value, and determine a ratio of a product of the reliability and the second value to an average latency is a fourth value — S506

Determine a ratio of the fourth value to energy consumption as network energy efficiency — S507

FIG. 5

Network energy efficiency determining apparatus 60

Communication unit — 602

Processing unit — 601

FIG. 6

70

701

Processor

CPU 0

CPU 1

702

Memory

Bus 703

Communication
interface

Acquiring unit

704

Transmitting unit

FIG. 7

## INTERNATIONAL SEARCH REPORT

| International application No. |
| --- |
| **PCT/CN2023/127614** |

| A. | CLASSIFICATION OF SUBJECT MATTER |
| --- | --- |
| | H04L 43/08(2022.01)i |

According to International Patent Classification (IPC) or to both national classification and IPC

| B. | FIELDS SEARCHED |
| --- | --- |

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNTXT, ENTXTC, WPABSC, DWPI: 切片, 时延, 可靠, 丢包, 流量, 能耗, 功耗, 能效, slice, latency, reliability, packet loss, traffic, consumption, energy, efficiency

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115695231 A (CHINA UNITED NETWORK COMMUNICATIONS GROUP CO., LTD.) 03 February 2023 (2023-02-03)<br>claims 1-24 | 1-40 |
| PX | CN 115695230 A (CHINA UNITED NETWORK COMMUNICATIONS GROUP CO., LTD.) 03 February 2023 (2023-02-03)<br>claims 1-28 | 1-40 |
| Y | WO 2021208882 A1 (HUAWEI TECHNOLOGIES CO., LTD.) 21 October 2021 (2021-10-21)<br>description, paragraphs 51-100 | 1-40 |
| Y | WO 2022052129 A1 (HUAWEI TECHNOLOGIES CO., LTD.) 17 March 2022 (2022-03-17)<br>description, paragraphs 2 and 106-196 | 1-40 |
| A | CN 111867102 A (CLOUDMINDS ROBOT CO., LTD.) 30 October 2020 (2020-10-30)<br>entire document | 1-40 |
| A | US 2015156714 A1 (HUAWEI TECHNOLOGIES CO., LTD.) 04 June 2015 (2015-06-04)<br>entire document | 1-40 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 January 2024** | **16 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/127614** |

**C. DOCUMENTS CONSIDERED TO BE RELEVANT**

| Category* | Citation of document, with indication, where appropriate, of the relevant passages | Relevant to claim No. |
|---|---|---|
| A | US 2021368514 A1 (T-MOBILE USA, INC.) 25 November 2021 (2021-11-25)<br>entire document | 1-40 |

Form PCT/ISA/210 (second sheet) (July 2022)

**INTERNATIONAL SEARCH REPORT**
**Information on patent family members**

International application No.

**PCT/CN2023/127614**

| Patent document cited in search report | | | Publication date (day/month/year) | Patent family member(s) | | | Publication date (day/month/year) |
|---|---|---|---|---|---|---|---|
| CN | 115695231 | A | 03 February 2023 | None | | | |
| CN | 115695230 | A | 03 February 2023 | None | | | |
| WO | 2021208882 | A1 | 21 October 2021 | US | 2023032235 | A1 | 02 February 2023 |
| | | | | BR | 112022020921 | A2 | 06 December 2022 |
| | | | | EP | 4132075 | A1 | 08 February 2023 |
| | | | | CN | 113543189 | A | 22 October 2021 |
| | | | | IN | 202227058795 | A | 25 November 2022 |
| WO | 2022052129 | A1 | 17 March 2022 | CN | 116097709 | A | 09 May 2023 |
| CN | 111867102 | A | 30 October 2020 | None | | | |
| US | 2015156714 | A1 | 04 June 2015 | WO | 2014022960 | A1 | 13 February 2014 |
| | | | | EP | 2874430 | A1 | 20 May 2015 |
| | | | | CN | 103782620 | A | 07 May 2014 |
| US | 2021368514 | A1 | 25 November 2021 | None | | | |

Form PCT/ISA/210 (patent family annex) (July 2022)

**REFERENCES CITED IN THE DESCRIPTION**

**Patent documents cited in the description**

- CN 202211349104
- CN 202211352422